# EUROPEAN PATENT APPLICATION

(11) **EP 4 398 632 A1**
(43) Date of publication of application: **10.07.2024**
(21) Application number: 22875017.0
(22) Date of filing: 28.09.2022
(51) Int. Cl.: H04W 36/00, H04W 36/08, H04W 36/34

(54) **COMMUNICATION METHOD AND APPARATUS**

(30) Priority: 30.09.2021 CN 202111158934
(71) Applicant: Huawei Technologies Co., Ltd., Shenzhen, Guangdong 518129 (CN)
(72) Inventor: HU, Xingxing, Shenzhen, Guangdong 518129 (CN)
(74) Representative: Pfenning, Meinig & Partner mbB
(86) International application number: PCT/CN2022/122238
(87) International publication number: WO 2023/051634

(57) **Abstract**

This application relates to a communication method and apparatus. A source master network device receives first information from a target master network device, where the first information includes information about M candidate primary cells and information about N candidate primary secondary cells. The source master network device sends the first information to a terminal device. The source master network device receives measurement results of a part or all of the M candidate primary cells from the terminal device. The source master network device sends a handover command to the terminal device, to indicate the terminal device to be handed over to a target candidate primary cell and connected to a target candidate primary secondary cell. According to the method provided in embodiments of this application, the terminal device is handed over to a proper primary cell in a dual-connectivity or multi-connectivity scenario, and maintains communication with a secondary network device, to improve communication quality.

## Description

### CROSS-REFERENCE TO RELATED APPLICATIONS

This application claims priority to Chinese Patent Application No. 202111158934.4, filed with the China National Intellectual Property Administration on September 30, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless network, one user equipment (user equipment, UE) can communicate with a plurality of base stations, that is, dual-connectivity (dual-connectivity, DC) or multi-connectivity (multi-connectivity, MC). The DC may also be referred to as multi-radio dual-connectivity (multi-radio dual connectivity, MR-DC), and the MC may also be referred to as multi-radio multi-connectivity (multi-radio multi connectivity, MR-MC). Specifically, the UE may be connected to a master node (master node, MN) and at least one secondary node (secondary node, SN). The MN provides a primary cell (primary cell, PCell) for the UE, the SN provides a primary secondary cell (primary secondary cell, PSCell) for the UE, and the MN exchanges control plane signaling with a core network. Through the DC or MC, the UE can obtain a communication service through resources of a plurality of base stations, to perform high-rate data transmission.

In a DC scenario or an MC scenario, the UE may be handed over to a PCell to maintain communication quality of the UE. However, the UE needs to measure all neighboring cells on a frequency, which is inefficient and affects handover effect. In addition, during a PCell handover, if the UE disconnects from a PSCell, a data throughput of the UE decreases.

### SUMMARY

Embodiments of this application provide a communication method and apparatus, for a handover of UE in a DC scenario or an MC scenario.

According to a first aspect, a first communication method is provided. The method may be performed by a source master network device of a terminal device, or may be performed by another device including a function of the source master network device, or may be performed by a chip system or another function module. The chip system or the function module can implement the function of the source master network device. The chip system or the function module is, for example, disposed in the source master network device. The source master network device is, for example, an access network device such as a base station.

The method includes: receiving first information from a target master network device, where the first information includes information about M candidate primary cells and information about N candidate primary secondary cells, the M candidate primary cells are determined by the target master network device for a terminal device, the N candidate primary secondary cells are determined by at least one secondary network device for the terminal device, and M and N are positive integers; sending the first information to the terminal device; receiving a first measurement result from the terminal device, where the first measurement result includes measurement results of a part or all of the M candidate primary cells, and the first measurement result is used to select a target candidate primary cell from the M candidate primary cells; and sending a handover command to the terminal device, where the handover command indicates the terminal device to be handed over to the target candidate primary cell and connected to a target candidate primary secondary cell, and the target candidate primary secondary cell belongs to the N candidate primary secondary cells.

In this embodiment of this application, the target master network device may send the first information to the source master network device, the source master network device sends the first information to the terminal device, and the terminal device may measure a part or all of the M candidate primary cells indicated by the first information, so that the source master network device can select the target candidate primary cell for the terminal device based on the measurement results. According to the method provided in this embodiment of this application, a process of handing over the terminal device to a primary cell in a DC scenario or an MC scenario is implemented. In addition, in this embodiment of this application, the source master network device determines the target candidate primary cell, which means that the source master network device has a decision right to select the target candidate primary cell, so that a selection result is more accurate, and a proper target candidate primary cell is selected for the terminal device, to improve communication quality of the terminal device in the target candidate primary cell. In addition, because a selection result is accurate, a process in which reselection is required because the selected target candidate primary cell is improper is reduced, and communication efficiency of the terminal device can be improved. In addition, during a primary cell handover of the terminal device, dual-connectivity communication can still be maintained, to improve a data throughput.

In an optional implementation, the method further includes: receiving a second measurement result from the terminal device, where the second measurement result includes measurement results of a part or all of the N candidate primary secondary cells, and the second measurement result is used to select the target candidate primary secondary cell. In addition to measuring the candidate primary cell, the terminal device may further measure the candidate primary secondary cell. A measurement result of the candidate primary secondary cell may be used to assist the source master network device in selecting the target candidate primary secondary cell for the terminal device for access.

In an optional implementation, the handover command includes first indication information, and the first indication information indicates the terminal device to be connected to the target candidate primary secondary cell. The first indication information includes, for example, an identifier of the target candidate primary secondary cell, or may indicate the target candidate primary secondary cell in another manner.

In an optional implementation, the second measurement result is further used to select the target candidate primary cell. When selecting the target candidate primary cell, the terminal device may refer to the first measurement result, or may refer to the first measurement result and the second measurement result. For example, the terminal device determines, based on the first measurement result, that signal quality of two candidate primary cells is good, and it can be learned from the second measurement result that signal quality of a candidate primary secondary cell corresponding to one candidate primary cell is also good. In this case, the source master network device may determine the candidate primary cell as the target candidate primary cell, and may further determine the candidate primary secondary cell corresponding to the candidate primary cell as the target candidate primary secondary cell. In this way, signal quality of both the target candidate primary cell and the target candidate primary secondary cell that are accessed by the terminal device after a handover can be good, and communication quality of the terminal device can be improved.

In an optional implementation, a measurement result of a candidate primary secondary cell included in the second measurement result is higher than a first threshold; and/or the measurement result of the candidate primary secondary cell included in the second measurement result meets a selection condition of the candidate primary secondary cell. In other words, the terminal device may report a measurement result of a candidate primary secondary cell only when the measurement result of the candidate primary secondary cell meets a corresponding condition. If a measurement result of a candidate primary secondary cell does not meet the first threshold or a selection condition of the candidate primary secondary cell, the terminal device may not report the measurement result of the candidate primary secondary cell. In this manner, a measurement result of a candidate primary secondary cell with a good measurement result may be reported to the source master network device for selection by the source master network device. However, there is a low probability that the source master network device selects a candidate primary secondary cell with a poor measurement result. Even if a poor measurement result is reported, the measurement result may also be redundant information. Therefore, in this embodiment of this application, the poor measurement result is not reported, so that redundant information can be reduced, and signaling overheads can be reduced.

In an optional implementation, the first information further includes a selection condition of at least one candidate primary secondary cell, the selection condition includes a priority of the candidate primary secondary cell, and/or includes a first threshold value, and the first threshold value is a threshold value that needs to be met by a parameter value obtained through measurement when the candidate primary secondary cell is selected. When determining the target candidate primary secondary cell, the source master network device may select a proper target candidate primary secondary cell by referring to, for example, a selection condition of the candidate primary secondary cell. Alternatively, a condition used by the source master network device to determine the target candidate primary secondary cell may be obtained in another manner, for example, determined by the source master network device, or predefined in a protocol. This is not limited in this embodiment of this application.

In an optional implementation, the second measurement result is included in layer 1 control information or layer 2 control information. In this embodiment of this application, a handover process is based on a layer 1 or a layer 2. Therefore, the second measurement result may be included in the layer 1 control information or the layer 2 control information. Compared with layer 3 control information, both a generation speed and a transmission speed of the layer 1 control information or the layer 2 control information are high. Therefore, handover efficiency of the terminal device can be improved.

In an optional implementation, the first measurement result is included in the layer 1 control information or the layer 2 control information. For beneficial effects of this implementation, refer to the description of the foregoing implementation.

In an optional implementation, the first information further indicates at least one correspondence, and each correspondence is a correspondence between one candidate primary cell and at least one candidate primary secondary cell. For example, after determining a target candidate primary cell, the source master network device may determine a candidate primary secondary cell that has a correspondence with the target candidate primary cell. If a measurement result of the candidate primary secondary cell is good, the source master network device may determine the candidate primary secondary cell as the target candidate primary secondary cell. In this manner, a range is narrowed when the target candidate primary secondary cell is determined, and efficiency of determining the target candidate primary secondary cell can be improved.

In an optional implementation, the receiving first information from a target master network device includes: receiving handover request acknowledgment information from the target master network device, where the handover request acknowledgment information includes the first information. The method further includes: sending a handover request message to the target master network device, where the handover request message includes information about a source secondary network device that the terminal device accesses when accessing the source master network device. The information about the source secondary network device of the terminal device includes, for example, information about a primary secondary cell provided by the source secondary network device. The primary secondary cell provided by the source secondary network device may also be used as a candidate primary secondary cell when the terminal device is handed over. Therefore, the source master network device may send the information about the source secondary network device to the target master network device, so that the target master network device also uses the primary secondary cell provided by the source secondary network device as a candidate primary secondary cell. This expands a selection range when the target candidate primary secondary cell is selected for the terminal device, and helps select a more proper target candidate primary secondary cell for the terminal device.

In an optional implementation, the handover request message further includes second indication information, and the second indication information indicates that the terminal device is to be handed over to the target candidate primary cell through a layer 1 or layer 2-based handover process. The second indication information may indicate that a current handover process is a layer 1 or layer 2-based handover process, so that the target master network device determines a handover process to be performed.

According to a second aspect, a communication method is provided. The method may be performed by a terminal device, or may be performed by another device including a function of the terminal device, or may be performed by a chip system or another function module. The chip system or the function module can implement the function of the terminal device. The chip system or the function module is, for example, disposed in the terminal device. The method includes: receiving first information from a source master network device of the terminal device, where the first information includes information about M candidate primary cells and information about N candidate primary secondary cells, the M candidate primary cells are determined by the target master network device for the terminal device, the N candidate primary secondary cells are determined by at least one secondary network device for the terminal device, and M and N are positive integers; sending a first measurement result to the source master network device, where the first measurement result includes measurement results obtained by measuring a part or all of the M candidate primary cells; and receiving a handover command from the source master network device, where the handover command indicates to hand over to a target candidate primary cell and connected to a target candidate primary secondary cell, the target candidate primary secondary cell belongs to the N candidate primary secondary cells, and the target candidate primary cell belongs to the M candidate primary cells.

In an optional implementation, the method further includes: sending a second measurement result to the source master network device, where the second measurement result includes measurement results obtained by measuring a part or all of the N candidate primary secondary cells.

In an optional implementation, the handover command includes first indication information, and the first indication information indicates the terminal device to be connected to the target candidate primary secondary cell.

In an optional implementation, a measurement result of a candidate primary secondary cell included in the second measurement result is higher than a first threshold; and/or the measurement result of the candidate primary secondary cell included in the second measurement result meets a selection condition of the candidate primary secondary cell.

In an optional implementation, the first information further includes at least one selection condition, each selection condition corresponds to one candidate primary secondary cell, the selection condition includes a priority of the candidate primary secondary cell, and/or includes a first threshold value, and the first threshold value is a threshold value that needs to be met by a parameter value obtained through measurement when the candidate primary secondary cell is selected.

In an optional implementation, the second measurement result is included in layer 1 control information or layer 2 control information.

In an optional implementation, the first measurement result is included in the layer 1 control information or the layer 2 control information.

In an optional implementation, the first information further indicates at least one correspondence, and each correspondence is a correspondence between one candidate primary cell and at least one candidate primary secondary cell.

In an optional implementation, the method further includes: sending third indication information to the target master network device, where the third indication information indicates that the terminal device is to access the target candidate primary secondary cell. For example, after accessing the target candidate primary cell, the terminal device may send the third indication information to the target candidate primary cell (or the target master network device that provides the target candidate primary cell), to indicate that the terminal device is to be connected to the target candidate primary secondary cell, so that the target candidate primary cell can determine a candidate primary secondary cell that the terminal device accesses, and the target candidate primary cell can subsequently perform a corresponding configuration on the target candidate primary secondary cell.

For technical effects brought by the second aspect or the optional implementations, refer to descriptions of the technical effects brought by the first aspect or the corresponding implementations.

According to a third aspect, a first communication system is provided. The communication system may include a source master network device, a target master network device, and at least one secondary network device. The source master network device may be the source master network device in the first aspect or the second aspect, the target master network device may be the target master network device in the first aspect or the second aspect, and the at least one secondary network device may be the at least one secondary network device in the first aspect or the second aspect. For example, the target master network device is configured to send first information to the source master network device. The first information includes information about M candidate primary cells and information about N candidate primary secondary cells, the M candidate primary cells are determined by the target master network device for a terminal device, the N candidate primary secondary cells are determined by the at least one secondary network device for the terminal device, and M and N are positive integers. The source master network device is configured to: send the first information to the terminal device, receive a first measurement result from the terminal device, and send a handover command to the terminal device. The handover command indicates the terminal device to be handed over to a target candidate primary cell and connected to a target candidate primary secondary cell. The target candidate primary secondary cell belongs to the N candidate primary secondary cells, the first measurement result includes measurement results of a part or all of the M candidate primary cells, and the first measurement result is used to select the target candidate primary cell.

For a method that can be implemented by each device in the communication system, a corresponding technical effect, and the like, refer to the descriptions in the first aspect or the second aspect.

According to a fourth aspect, a communication method is provided. The method may be performed by a source network device of a terminal device, or may be performed by another device including a function of the source network device, or may be performed by a chip system or another function module. The chip system or the function module can implement the function of the source network device. The chip system or the function module is, for example, disposed in the source network device. The communication method may be applied to a single-connectivity scenario, and the source network device is a network device accessed by the terminal device before a cell handover. Alternatively, the communication method may be applied to a DC scenario or an MC scenario. In the DC or MC scenario, the method may be applied to a primary cell handover process. In this case, the source network device is, for example, a source master network device of the terminal device, namely, a master network device accessed by the terminal device before a primary cell handover. Alternatively, in the DC or MC scenario, the communication method may also be applied to a primary secondary cell handover process. In this case, the source network device is, for example, a master network device of the terminal device. The source network device is, for example, an access network device such as a base station. The method includes: sending a first message to a target network device, where the first message is used to request to hand over the terminal device from the source network device to the target network device, the first message includes fourth indication information and address information of the source network device, the fourth indication information indicates that the terminal device is to be handed over to the target network device through a layer 1 or layer 2-based handover process, and the address information of the source network device is used to migrate data to the source network device; receiving a second message from the target network device, where the second message includes third information and address information of the target network device, the third information includes information about K candidate cells determined by the target network device for the terminal device, the address information of the target network device is used to migrate data to the target network device after the terminal device is handed over to the target network device, and K is a positive integer; and sending the third information to the terminal device, where the third information is used to determine, from the K candidate cells, a target candidate cell that the terminal device accesses.

According to the method provided in this embodiment of this application, the UE can implement a layer 1 or layer 2-based PCell handover process or PSCell handover process in the DC or MC scenario. In this embodiment of this application, network devices may learn address information of each other in advance, and when data of UE is transferred during a subsequent handover between the network devices, the address information does not need to be obtained through control plane interaction, to improve data transfer efficiency.

In an optional implementation, the source network device is a source master network device accessed by the terminal device, and the target network device is a target master network device or a target secondary network device of the terminal device. For example, the communication method is applied to the DC or MC scenario. If the communication method relates to a primary cell handover process in the DC or MC scenario, the source network device is, for example, a source master network device of the terminal device, namely, a master network device accessed by the terminal device before the primary cell handover, and the target network device is, for example, a target master network device of the terminal device, namely, a master network device accessed by the terminal device after the primary cell handover. Alternatively, if the communication method relates to a primary secondary cell handover process in the DC or MC scenario, the source network device is, for example, a source master network device of the terminal device (if a primary cell handover is not related in this case, it may also be considered that the source network device is a master network device of the terminal device), and the target network device is, for example, a target secondary network device of the terminal device, namely, a secondary network device accessed by the terminal device after the primary secondary cell handover.

In an optional implementation, the first message further includes fifth indication information, and the fifth indication information indicates that when the terminal device is handed over from the target network device back to the source network device, the target network device is allowed not to send a handover request message to the source network device. For example, after the terminal device is handed over to the target network device, if the terminal device needs to be handed over to the source network device again, the target network device may not send the handover request message to the source network device based on the fifth indication information. For example, the target network device directly indicates the terminal device to be handed over to the source network device. This reduces signaling overheads in a handover process, and improves handover efficiency.

In an optional implementation, the third information further includes first reference information, the first reference information indicates to determine a radio resource configuration of a first candidate cell based on a radio resource configuration of a reference cell corresponding to the first candidate cell, and the first candidate cell is one of the K candidate cells; and/or the third information further includes second reference information, the second reference information indicates that a radio resource configuration of a second candidate cell is determined based on a radio resource configuration of a cell currently accessed by the terminal device, or indicates that the radio resource configuration of the second candidate cell is configured in a form of all configuration, and the second candidate cell is one of the K candidate cells. The "all configuration" can also be referred to as a "full configuration". In this embodiment of this application, to enable the UE to be handed over back and forth between configured cells, when a cell handover occurs, the UE may retain information about each radio resource configured by a network side for the UE. The network side may further subsequently configure a new radio resource for the terminal device. However, the radio resource configuration may be obtained through delta configuration performed based on another radio resource configuration. For example, a radio resource configuration 1 is obtained through delta configuration performed based on a radio resource configuration 2. In this case, when configuring the radio resource configuration 2 for the terminal device, the network device needs to send only a changed part of the radio resource configuration 2 relative to the radio resource configuration 1 to the terminal device, and the network device may not need to send a part that is the same as the radio resource configuration 1 to the terminal device, to reduce signaling overheads. If the third information uses this delta configuration manner, after the source network device sends the third information to the terminal device, the terminal device may not know that a radio resource configuration based on which delta configuration is performed to obtain a radio resource configuration included in the third information. Consequently, the terminal device cannot obtain the radio resource configuration indicated by the third information. Therefore, it is proposed in this embodiment of this application that the third information may further include reference information, for example, include the first reference information and/or the second reference information, to indicate a delta configuration object corresponding to a radio resource configuration included in the third information, so that the terminal device can obtain a radio resource configuration of a candidate cell.

In an optional implementation, the method further includes: sending the address information of the target network device to at least one network device other than the target network device. For example, the at least one network device is a target network device to which the terminal device may be subsequently handed over, and the at least one network device may be used as a secondary network device or may be used as a master network device. For example, if the source network device is a master network device, the target network device is a target secondary network device, and the at least one network device includes a source master network device of the terminal device, the source master network device can obtain address information of the target secondary network device. Therefore, after the terminal device is handed over to the target secondary network device, the source master network device may migrate data of the terminal device to the target secondary network device based on the address information of the target secondary network device, and does not need to obtain the address information through control plane interaction, to improve data transfer efficiency.

In an optional implementation, the method further includes: sending sixth indication information to the terminal device. The sixth indication information indicates to use a first cell as a candidate cell when the terminal device is handed over from the first cell to a second cell. The currently accessed cell is, for example, a primary cell or a primary secondary cell. When the terminal device is handed over from a currently accessed cell to another cell, the currently accessed cell may be automatically used as a candidate cell. In this way, a network may no longer need to configure the currently accessed cell as a candidate cell of the terminal device, to reduce a network workload and expand a selection range of the terminal device during a handover.

In an optional implementation, the method further includes: receiving a measurement result from the terminal device, where the measurement result includes measurement results of a part or all of the K candidate cells, and the measurement result is used to select the target candidate cell; and sending a first handover command to the terminal device, where the first handover command indicates the terminal device to be handed over to the target candidate cell. The terminal device may measure a part or all of the K candidate cells, and report obtained measurement results to the source network device, so that the source network device can select the target candidate cell for the terminal device based on the measurement results. For example, the source network device selects a cell with a good measurement result as the target candidate cell as much as possible, to improve communication quality of the terminal device.

According to a fifth aspect, a communication method is provided. The method may be performed by a target network device of a terminal device, or may be performed by another device including a function of the target network device, or may be performed by a chip system or another function module. The chip system or the function module can implement the function of the target network device. The chip system or the function module is, for example, disposed in the target network device. The fourth communication method may be applied to a single-connectivity scenario. In this case, a source network device is a network device accessed by the terminal device before a cell handover, and the target network device is a network device accessed by the terminal device after a cell handover. Alternatively, the fourth communication method may be applied to a DC scenario or an MC scenario. In the DC or MC scenario, the method may be applied to a primary cell handover process. In this case, the source network device is, for example, a source master network device of the terminal device, namely, a master network device accessed by the terminal device before the primary cell handover, and the target network device is, for example, a target master network device of the terminal device, namely, a master network device accessed by the terminal device after the primary cell handover. Alternatively, in the DC or MC scenario, the fourth communication method may also be applied to a primary secondary cell handover process. In this case, the source network device is, for example, a master network device of the terminal device, and the target network device is, for example, a target secondary network device of the terminal device, namely, a secondary network device accessed by the terminal device after the primary secondary cell handover. The target network device is, for example, an access network device such as a base station. The method includes: receiving a first message from the source network device of the terminal device, where the first message is used to request to hand over the terminal device to the target network device, the first message includes fourth indication information and address information of the source network device of the terminal device, the fourth indication information indicates that the terminal device is to be handed over to the target network device through a layer 1 or layer 2-based handover process, and the address information of the source network device is used to migrate data to the source network device; and sending a second message to the source network device, where the second message includes third information and address information of the target network device, the third information includes information about K candidate cells determined by the target network device for the terminal device, the address information of the target network device is used to migrate data to the target network device after the terminal device is handed over to the target network device, and K is a positive integer.

In an optional implementation, the source network device is a source master network device accessed by the terminal device, and the target network device is a target master network device or a target secondary network device of the terminal device.

In an optional implementation, the first message further includes fifth indication information, and the fifth indication information indicates that when the terminal device is handed over from the target network device back to the source network device, the target network device is allowed not to send a handover request message to the source network device.

In an optional implementation, the third information further includes first reference information, the first reference information indicates to determine a radio resource configuration of a first candidate cell based on a radio resource configuration of a reference cell corresponding to the first candidate cell, and the first candidate cell is one of the K candidate cells; and/or the third information further includes second reference information, the second reference information indicates that a radio resource configuration of a second candidate cell is determined based on a radio resource configuration of a cell currently accessed by the terminal device, or indicates that information about the radio resource configuration of the second candidate cell is configured in a form of all configuration, and the second candidate cell is one of the K candidate cells.

In an optional implementation, the method further includes: sending a second handover command to the terminal device, where the second handover command indicates the terminal device to be handed over to the source network device; and migrating data of the terminal device to the source network device based on the address information of the source network device.

For technical effects brought by the fifth aspect or the optional implementations, refer to descriptions of the technical effects brought by the fourth aspect or the corresponding implementations.

According to a sixth aspect, a communication method is provided. The method may be performed by a terminal device, or may be performed by another device including a function of the terminal device, or may be performed by a chip system or another function module. The chip system or the function module can implement the function of the terminal device. The chip system or the function module is, for example, disposed in the terminal device. The method includes: receiving third information and sixth indication information from a source network device of the terminal device, where the third information includes information about K candidate cells determined by a target network device of the terminal device for the terminal device, and the sixth indication information indicates to use a currently accessed cell as a candidate cell when the terminal device is handed over from the currently accessed cell to another cell; and measuring a part or all of the K candidate cells, where obtained measurement results are used to determine a target candidate cell of the terminal device.

In an optional implementation, the source network device is a source master network device accessed by the terminal device, and the target network device is a target master network device or a target secondary network device of the terminal device.

In an optional implementation, the third information further includes first reference information, the first reference information indicates to determine a radio resource configuration of a first candidate cell based on a radio resource configuration of a reference cell corresponding to the first candidate cell, and the first candidate cell is one of the K candidate cells; and/or the third information further includes second reference information, the second reference information indicates that a radio resource configuration of a second candidate cell is determined based on a radio resource configuration of a cell currently accessed by the terminal device, or indicates that information about the radio resource configuration of the second candidate cell is configured in a form of all configuration, and the second candidate cell is one of the K candidate cells.

In an optional implementation, the method further includes: storing radio resource configurations of the K candidate cells.

For technical effects brought by the sixth aspect or the optional implementations, refer to descriptions of the technical effects brought by the fourth aspect or the corresponding implementations.

According to a seventh aspect, a communication system is provided. The communication system includes a source network device and a target network device. The source network device is, for example, the source network device according to any one of the fourth aspect to the sixth aspect. The target network device is, for example, the target network device according to any one of the fourth aspect to the sixth aspect. For example, the source network device is configured to send a first message to the target network device, where the first message is used to request to hand over the terminal device to the target network device, the first message includes fourth indication information and address information of the source network device, the fourth indication information indicates that the terminal device is to be handed over to the target network device through a layer 1 or layer 2-based handover process, and the address information of the source network device is used to migrate data to the source network device. The target network device is configured to send a second message to the source network device, where the second message includes third information and address information of the target network device, the third information includes information about K candidate cells determined by the target network device for the terminal device, the address information of the target network device is used to migrate data to the target network device after the terminal device is handed over to the target network device, and K is a positive integer. The source network device is further configured to send the third information to the terminal device, where the third information is used to determine, from the K candidate cells, a target candidate cell that the terminal device accesses.

For a method that can be implemented by each device in the communication system, a corresponding technical effect, and the like, refer to descriptions in any one of the fourth aspect to the sixth aspect.

According to an eighth aspect, a communication apparatus is provided. The communication apparatus may be the terminal device according to any one of the first aspect to the seventh aspect. The communication apparatus has a function of the terminal device. The communication apparatus is, for example, the terminal device, or a functional module in the terminal device, for example, a baseband apparatus or a chip system. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

In an optional implementation, the communication apparatus further includes a storage unit (also referred to as a storage module sometimes), and the processing unit is configured to be coupled to the storage unit, and execute a program or instructions in the storage unit, to enable the communication apparatus to perform a function of the terminal device according to any one of the first aspect to the seventh aspect.

According to a ninth aspect, a communication apparatus is provided. The communication apparatus may be the network device according to any one of the first aspect to the seventh aspect. The communication apparatus has a function of the network device. The communication apparatus is, for example, the network device, or a functional module in the network device, for example, a baseband apparatus or a chip system. The network device is, for example, the source master network device, the source network device, or the target network device described in the foregoing aspects. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions in the ninth aspect.

In an optional implementation, the communication apparatus further includes a storage unit (also referred to as a storage module sometimes), and the processing unit is configured to be coupled to the storage unit, and execute a program or instructions in the storage unit, to enable the communication apparatus to perform a function of the network device according to any one of the first aspect to the seventh aspect.

According to a tenth aspect, a computer-readable storage medium is provided. The computer-readable storage medium is configured to store a computer program or instructions. When the computer program or the instructions is/are run, the method performed by the terminal device or the network device in the foregoing aspects is implemented.

According to an eleventh aspect, a computer program product including instructions is provided. When the computer program product runs on a computer, the methods in the foregoing aspects are implemented.

### BRIEF DESCRIPTION OF DRAWINGS

FIG. 1A is a schematic diagram of a user plane protocol stack on a network side in EN-DC;
FIG. 1B is a schematic diagram of a user plane protocol stack on a network side in NR-DC;
FIG. 1C is a schematic diagram of an application scenario according to an embodiment of this application;
FIG. 2 is a flowchart of a communication method according to an embodiment of this application;
FIG. 3 is a flowchart of another communication method according to an embodiment of this application;
FIG. 4 is a schematic diagram of another application scenario according to an embodiment of this application;
FIG. 5 is a flowchart of still another communication method according to an embodiment of this application; and
FIG. 6 is a schematic block diagram of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, a roadside unit (road side unit, RSU), or a wireless apparatus (for example, a communication module, a modem, or a communication chip) built in the foregoing devices. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like. For ease of description, in embodiments of this application, UE is used as an example of the communication apparatus for description.

A network device in embodiments of this application includes, for example, an access network device and/or a core network device. The access network device is a device having a wireless transceiver function, and is configured to communicate with the terminal device. The access network device includes but is not limited to a base transceiver station (BTS), a NodeB (NodeB), an evolved NodeB (eNodeB/eNB, or gNodeB/gNB), a transmission reception point (transmission reception point, TRP), a base station evolved from the 3rd generation partnership project (3rd generation partnership project, 3GPP), an access node in a wireless fidelity (wireless fidelity, Wi-Fi) system, a wireless relay node, a wireless backhaul node, and the like in the foregoing communication systems. The base station may be a macro base station, a micro base station, a pico base station, a small cell, a relay station, or the like. A plurality of base stations may support networks of a same access technology mentioned above, or may support networks of different access technologies mentioned above. The base station may include one or more co-site or non-co-site transmission receiving points. Alternatively, the network device may be a radio controller, a central unit (central unit, CU), and/or a distributed unit (distributed unit, DU) in a cloud radio access network (cloud radio access network, CRAN) scenario. Alternatively, the network device may be a server, a wearable device, a vehicle-mounted device, an RSU, or the like. The following uses an example in which the access network device is a base station for description. A plurality of network devices in the communication system may be base stations of a same type, or may be base stations of different types. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example, and the core network device includes: an access and mobility management function (access and mobility management function, AMF), a session management function (session management function, SMF), a user plane function (user plane function, UPF), and the like.

In embodiments of this application, a communication apparatus configured to implement a function of the network device may be a network device, or may be an apparatus, for example, a communication module or a chip system, that can support the network device in implementing the function. The apparatus may be installed in the network device. In the technical solutions provided in embodiments of this application, an example in which the apparatus configured to implement the function of the network device is the network device is for describing the technical solutions provided in embodiments of this application.

In the following, unless otherwise specified, the "network device" is, for example, an "access network device", and an example in which a base station is used as an "access network device" is used for description in this application.

MR-DC includes various forms, for example, evolved universal terrestrial radio access new radio dual-connectivity (E-UTRA NR dual connectivity, EN-DC), next-generation radio access network evolved universal terrestrial radio access dual-connectivity (next generation-RAN E-UTRA dual connectivity, NGEN-DC), new radio evolved universal terrestrial radio access dual-connectivity (NR E-UTRA dual connectivity, NE-DC), and new radio dual-connectivity (NR dual connectivity, NR-DC). In the EN-DC, a master node is a long term evolution (long term evolution, LTE) base station connected to a 4th generation mobile communication technology (the 4th generation, 4G) evolved packet core (evolved packet core, EPC), and a secondary node is an NR base station. In the NGEN-DC, a master node is an LTE base station ng-eNB connected to a 5th generation core (5th generation core, 5GC) of a 5th generation mobile communication technology (5th generation, 5G), and a secondary node is an NR base station. In the NE-DC, a master node is an NR base station connected to a 5GC, and a secondary node is an LTE base station. In the NR-DC, a master node is an NR base station connected to a 5GC, and a secondary node is an NR base station.

For UE in the MR-DC, a secondary node may have a user plane connection to a core network connected to a master node. That is, in a downlink direction, the core network connected to the master node may directly send data to the UE through the secondary node; and in an uplink direction, the UE may directly send data to the core network connected to the master node through the secondary node. Moreover, in addition to establishing a control plane connection, there may also be a user plane connection between the master node and the core network.

Because the UE may simultaneously receive services of a plurality of cells under one base station, a serving cell group provided by an MN for the UE may also be referred to as a master cell group (master cell group, MCG). Similarly, a serving cell group provided by an SN for the UE is referred to as a secondary cell group (secondary cell group, SCG). One MN may provide one or more MCGs, one SN may provide one or more SCGs, one MCG includes at least one cell (cell), and one SCG also includes at least one cell. When one MCG includes only one cell, the cell is a primary cell (primary cell, PCell) of the UE. When one SCG includes only one cell, the cell is a primary secondary cell (primary secondary cell, PSCell) of the UE. In an NR system, a PCell and a PSCell may be collectively referred to as special cells (special sell, SpCell). When one MCG or one SCG includes a plurality of cells, one cell in the MCG or the SCG is an SpCell, and cells other than the SpCell are referred to as secondary cells (secondary cell, SCell). In this case, the SCells in each cell group are aggregated with the SpCell to provide services for the UE.

A PCell is a cell operating on a primary carrier. The UE performs an initial connection setup procedure or starts a connection reestablishment procedure in the PCell. In a handover process, the PCell is indicated as a primary cell.

A PSCell belongs to cells of an SCG, and is a cell in which the UE is indicated to perform random access or initial physical uplink shared channel (physical uplink shared channel, PUSCH) transmission (for example, a random access procedure is omitted in an SCG change procedure).

An SCell is a cell operating on a secondary carrier. Once a radio resource control (radio resource control, RRC) connection is established, the SCell may be configured to provide additional radio resources.

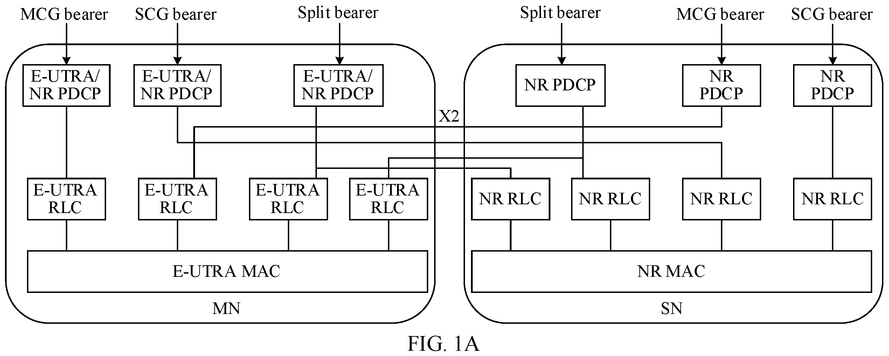

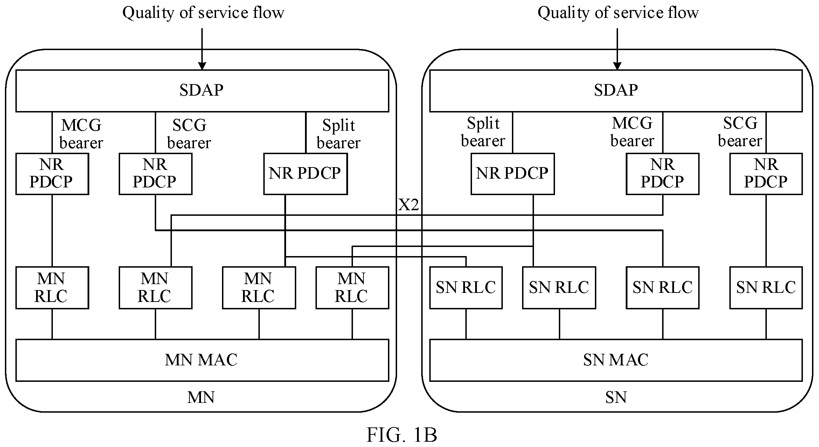

In the MR-DC, data radio bearers (data radio bearer, DRB) include an MCG bearer (MCG bearer), an SCG bearer (SCG bearer), and a split bearer (split bearer). The MCG bearer means that a radio link control (radio link control, RLC)/media access control (media access control, MAC) entity of the DRB is only on a master base station. The SCG bearer means that an RLC/MAC entity of the DRB is only on a secondary base station. The split bearer means that an RLC/MAC entity of the DRB is on both the master base station and the secondary base station. A bearer whose packet data convergence protocol (packet data convergence protocol, PDCP) is terminated on the MN is referred to as an MN terminated (MN terminated) bearer. That is, downlink (downlink, DL) data directly arrives at the MN from the core network, is processed by a PDCP or service data adaptation protocol (service data adaptation protocol, SDAP) of the MN, and then is sent to the UE through RLC and MAC. Uplink (uplink, UL) data is processed by the PDCP or SDAP of the MN and then is sent to the core network. Similarly, a bearer whose PDCP is terminated on the SN is referred to as an SN terminated (SN terminated) bearer. That is, DL data directly arrives at the SN from the core network, is processed by a PDCP or SDAP of the SN, and then is sent to the UE through RLC and MAC. UL data is processed by the PDCP or SDAP of the SN, and then is sent to the core network. FIG. 1A and FIG. 1B are schematic diagrams of a user plane protocol stack on a network side in the EN-DC and a user plane protocol stack on a network side in the NR-DC. The figures provide examples of various bearers.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numerals such as "first" and "second" in embodiments of this application are used to distinguish between a plurality of objects, and are not intended to limit a size, content, a sequence, a time sequence, an application scenario, priorities, or importance of the plurality of objects. For example, first information and second information may be same information, or may be different information. In addition, the names do not indicate a difference in size, content, priority, application scenario, importance, or the like of the two pieces of information.

In embodiments of this application, a target master network device may send the first information to a source master network device, the source master network device sends the first information to UE, and the UE may measure a part or all of M candidate primary cells indicated by the first information, so that the source master network device can select a target candidate primary cell for a terminal device based on measurement results. According to the method provided in embodiments of this application, a primary cell handover process of the UE in an MR-DC scenario is implemented. In addition, in embodiments of this application, the source master network device determines the target candidate primary cell, which means that the source master network device has a decision right to select the target candidate primary cell, so that a selection result is more accurate, and a proper target candidate primary cell is selected for the UE, to improve communication quality of the UE in the target candidate primary cell. In addition, because a selection result is accurate, a process in which reselection is required because the selected target candidate primary cell is improper is reduced, and communication efficiency of the UE can be improved. In addition, during a primary cell handover of the UE, dual-connectivity communication can still be maintained, to improve a data throughput.

The following describes the method provided in embodiments of this application with reference to the accompanying drawings. In the accompanying drawings corresponding to embodiments of this application, all optional steps are represented by dashed lines.

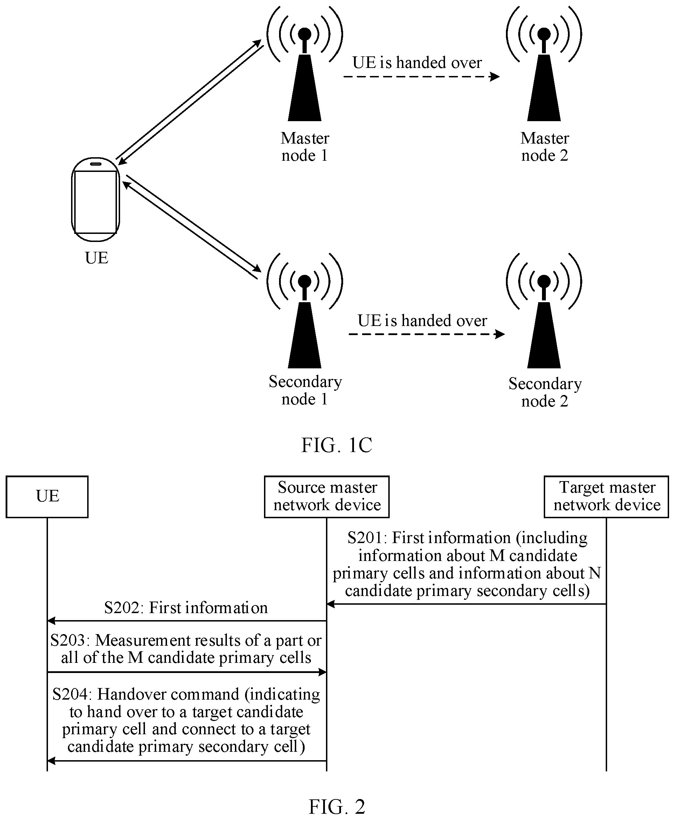

An embodiment of this application provides a communication method. The method may be applied to an MR-DC or MC scenario. FIG. 1C is a schematic diagram of the MR-DC scenario. For example, UE is currently connected to one master node (namely, a master node 1 in FIG. 1C) and a secondary node (namely, a secondary node 1 in FIG. 1C). In addition, the UE may be handed over to another PCell provided by the master node 1, or may be handed over to a PCell provided by another master node. In this embodiment of this application, an example in which the UE is handed over to a PCell provided by another master node is used. In this case, the another master node is referred to as a target master node, and is represented as a master node 2 in FIG. 1C. The PCell handover of the UE may also relate to a PSCell handover. The UE may be handed over to another PSCell provided by the secondary node 1, or the secondary node 1 may be changed to another secondary node and the UE may be handed over to a PSCell provided by the another secondary node. In this embodiment of this application, an example in which the UE is handed over to a PCell provided by another secondary node is used. In this case, the another secondary node is referred to as a target secondary node, and is represented as a secondary node 2 in FIG. 1C. Alternatively, in this embodiment of this application, the UE may not perform a PSCell handover.

If the UE supports MC communication, the UE may be connected to one master node and at least two secondary nodes, and each secondary node may provide one PSCell for the UE. PCell and PSCell handover processes of the UE in the MC scenario are similar to those in the MR-DC scenario described in FIG. 1C, and details are not described again.

For a procedure of the communication method, refer to FIG. 2. In the embodiment shown in FIG. 2, a source master network device is, for example, the master node 1 in FIG. 1C, a source secondary network device is, for example, the secondary node 1 in FIG. 1C, a target master network device (namely, a network device on which a target candidate primary cell is located) is, for example, the master node 2 in FIG. 1C, and a network device on which a target candidate primary secondary cell is located is, for example, the secondary node 1 or the secondary node 2 in FIG. 1C. In addition, in the following description process, the master network device is referred to as an MN. For example, a source master network device is referred to as a source MN, and a target master network device is referred to as a target MN. A secondary network device is referred to as an SN.

S201: The target MN sends first information to the source MN. Correspondingly, the source MN receives the first information from the target MN.

For example, the first information is carried in a handover request acknowledgment message, or the first information may be carried in another message.

A current handover process is, for example, a layer (layer, L) 1 or layer 2-based handover process. In other words, the MN handover process in this embodiment of this application may be a layer 1 or layer 2-based handover process. In the layer 1 or layer 2-based handover process, after obtaining a measurement result of a reference signal, UE may send the measurement result to a network device by using layer 1 or layer 2 control information. Compared with layer 3 control information, the layer 1 or layer 2 control information is generated at a higher speed, and therefore a delay in sending the measurement result by the UE can be reduced. In addition, the measurement result may also be a layer 1 measurement result. A layer 3 measurement result may be obtained after the UE filters a plurality of measurement results. The layer 1 measurement result may not need to be filtered, and the UE may obtain the layer 1 measurement result as long as the measurement is completed, to reduce a delay in obtaining the measurement result by the UE. It can be learned that a handover delay can be effectively reduced in the layer 1 or layer 2-based handover process. It should be noted that, in this embodiment of this application, the layer 1 or layer 2-based handover may also be replaced with another name, for example, a fast cell handover process. A layer 1 is, for example, a physical layer, and the layer 1 control information may be carried on a physical uplink control channel (physical uplink control channel, PUCCH) or a physical uplink shared channel (physical uplink shared channel, PUSCH). A layer 2 is, for example, a media access control (media access control, MAC) layer, and the layer 2 control information includes, for example, a media access control (media access control, MAC) control element (control element, CE). In addition, a layer 3 is, for example, a radio resource control (radio resource control, RRC) layer.

The first information may include information about M candidate PCells and information about N candidate PSCells. M and N are both positive integers. Information about a candidate PCell includes, for example, an identifier of the candidate PCell, or includes other information that indicates the candidate PCell. Information about a candidate PSCell includes, for example, an identifier of the candidate PSCell, or includes other information that indicates the candidate PSCell. Alternatively, the first information may include information about M MCGs and information about N SCGs. The information about the M MCGs includes the information about the M candidate PCells. Information about one MCG includes information about one candidate PCell, and may further include other information about the MCG. The information about the N SCGs includes the information about the N candidate PSCells. Information about one SCG includes information about one candidate PSCell, and may further include other information about the SCG. The information about the MCG and the information about the SCG are sent to the source MN by using the first information, so that the source MN can prepare a candidate PCell and/or a candidate PSCell for the UE.

The target MN may be understood as a candidate MN. For example, there is at least one candidate MN, and one candidate MN may be determined from the at least one candidate MN, so that the UE is handed over to the candidate MN. A part or all of the at least one candidate MN may send the first information to the source MN. In this embodiment of this application, an example in which one (namely, the target MN) of the at least one candidate MN sends the first information to the source MN is used.

The information about the M candidate PCells included in the first information may be determined by the target MN.

The information about the N candidate PSCells included in the first information may be determined by at least one SN. During a PCell handover of the UE, the UE may be handed over to a new PSCell or maintain a connection to a current PSCell. The PSCell in either case may be referred to as a candidate PSCell of the UE. In this case, the at least one SN is an SN that provides a candidate PSCell for the UE. Therefore, the at least one SN may also be referred to as at least one candidate SN. The target MN may be responsible for completing interaction with the at least one candidate SN, to obtain the information about the N candidate PSCells. The information about the N candidate PSCells may include information about a source SN of the UE and/or information about a PSCell provided by the source SN. The source SN of the UE is an SN accessed by the UE before the current PCell handover. The PSCell provided by the source SN may be a PSCell (namely, a PSCell to which the UE is currently connected) accessed by the UE before the current PCell handover, or may be another candidate PSCell that the UE has not accessed. In other words, the at least one candidate SN may include the source SN of the UE. If the UE still accesses the source SN after an MN handover, the UE can keep the SN unchanged after the MN handover. This reduces information exchange between the UE and another candidate SN other than the source SN, and also reduces information exchange between the source SN and another candidate SN. For example, the source SN can be prevented from transferring some downlink data that has not been sent to the UE to the another candidate SN, and a handover procedure of the UE can be simplified. In addition, because the source SN may be unchanged, in an SN handover process of the UE, a configuration between the UE and the source SN may not need to be released, and the UE may keep a connection to the source SN in the handover process, to prolong time of using the MR-DC by the UE and reduce impact on a throughput rate of the UE. In addition, because the source SN is unchanged, there is no need to reconfigure another candidate SN, to reduce signaling overheads caused by a configuration process.

The M candidate PCells are determined by the target MN for the UE. For example, the M candidate PCells are determined by the target MN based on candidate PCells provided by the source MN in a handover request message. The N candidate PSCells are determined by the at least one candidate SN for the UE, and the at least one candidate SN may be determined by the target MN for the UE. Each candidate SN may provide one or more candidate PSCells for the UE. The target MN may send the information about the M candidate PCells and the information about the N candidate PSCells to the source MN. The M candidate PCells may be used as candidate PCells of the UE, and the N candidate PSCells may be used as candidate PSCells of the UE. Because the target MN obtains the information about the source SN of the UE (or the information about the PSCell provided by the source SN), the target MN may consider including the source SN into a range of candidate SNs, so that the SN may change or may be unchanged during an MN handover of the UE. Selection of the SN is more flexible. Communication quality is improved by selecting an SN suitable for a communication condition of the UE.

S202: The source MN sends the first information to the UE. Correspondingly, the UE receives the first information from the source MN.

For example, the first information includes the information about the M MCGs and the information about the N SCGs. If the UE subsequently accesses a candidate PCell corresponding to one of the M MCGs, the UE may perform corresponding configuration based on information about the MCG, and the UE does not need to receive the information about the MCG. Similarly, if the UE subsequently accesses a candidate PSCell corresponding to one of the N SCGs, the UE may perform corresponding configuration based on information about the SCG, and the UE does not need to receive the information about the SCG.

S203: The UE sends a first measurement result to the source MN. Correspondingly, the source MN receives the first measurement result from the UE.

Specifically, the UE measures a part or all of the M candidate PCells based on the first information, to obtain the first measurement result, and sends the first measurement result to the source MN. The first measurement result may include measurement results of the part or all of the M candidate PCells. The UE may include, in the first measurement result, all measurement results of candidate PCells obtained through measurement, or the first measurement result includes only a part of measurement results obtained by the UE by measuring the candidate PCells (for example, the UE measures three candidate PCells in total, and the first measurement result includes measurement results of two of the candidate PCells, but does not include a measurement result of the other candidate PCell). If the first measurement result includes only a part of measurement results obtained by the UE by measuring the candidate PCells, the UE has screened the measurement results of the candidate PCells, and the first measurement result includes a measurement result that meets a screening condition.

A manner in which the UE screens the measurement results of the candidate PCells is: For example, if a measurement result of a candidate PCell meets a first reporting condition, the UE sends the measurement result of the candidate PCell to the source SN. If a measurement result of a candidate PCell does not meet the first reporting condition, the UE does not send the measurement result of the candidate PCell to the source SN. The first reporting condition is a reporting condition of a candidate PCell. For example, the first reporting condition is that a value of a measurement result of a candidate PCell is greater than (or higher than) a second threshold, the second threshold, for example, corresponds to a first parameter, and the first parameter is, for example, RSRP or RSRQ. For example, the second threshold is determined by the UE, or is configured by a network, or is preconfigured in the UE, or may be predefined in a protocol. Based on the first reporting condition, the UE may not necessarily send a poor measurement result of a candidate PCell to the source SN, to send less redundant information and reduce signaling overheads.

For another example, the first reporting condition is that a measurement result of a candidate PCell meets a second selection condition. For example, the first information further indicates L second selection conditions. Each second selection condition is a selection condition of one candidate PCell, and L is an integer greater than or equal to 1. In this case, the UE may determine, based on the second selection condition, whether to report a measurement result of a candidate PCell. If the UE obtains a measurement result of a candidate PCell, the UE may determine whether the measurement result meets a second selection condition of the candidate PCell. If the measurement result meets the second selection condition of the candidate PCell, the UE may send the measurement result of the candidate PCell to the source MN. If the measurement result does not meet the second selection condition of the candidate PCell, there is a low probability that the source MN determines the candidate PCell as a target candidate PCell of the UE, and the UE may not send the measurement result of the candidate PCell to the source MN, to reduce invalid information received by the source MN and reduce transmission overheads.

Optionally, the first measurement result may be layer 1 signal quality corresponding to the candidate PCell or layer 3 signal quality corresponding to the candidate PCell. Optionally, the first measurement result carries indication information to indicate a beam identifier and/or a cell identifier of the candidate PCell, so as to indicate a beam of a candidate PCell corresponding to the first measurement result or indicate a candidate PCell of the first measurement result. In this application, a beam may be a synchronization signal and a physical broadcast channel block (synchronization signal and PBCH block, SSB), or a channel state information-reference signal (channel state information-reference signal, CSI-RS). Correspondingly, a beam identifier may be an SSB index (SSB index), or a CSI-RS index (CSI-RS index).

Optionally, in addition to the measurement results of the part or all of the M candidate PCells, the first measurement result may further include a second measurement result, and the second measurement result includes measurement results of a part or all of the N candidate PSCells. Alternatively, the second measurement result may not be included in the first measurement result, and the UE may separately send the first measurement result and the second measurement result to the source MN. For example, the UE may first send the first measurement result and then send the second measurement result, or the UE may first send the second measurement result and then send the first measurement result, or may send the first measurement result and the second measurement result at the same time. The UE may include, in the second measurement result, all measurement results of candidate PSCells obtained through measurement, or the second measurement result includes only a part of measurement results obtained by the UE by measuring the candidate PSCells (for example, the UE measures three candidate PSCells in total, and the second measurement result includes measurement results of two of the candidate PSCells, but does not include a measurement result of the other candidate PSCell). If the second measurement result includes only a part of measurement results obtained by the UE by measuring the candidate PSCells, the UE may have screened the measurement results of the candidate PSCells, and the second measurement result includes a measurement result that meets a screening condition. Optionally, the second measurement result may be layer 1 signal quality corresponding to the candidate PSCell or layer 3 signal quality corresponding to the candidate PSCell. Optionally, the second measurement result carries indication information to indicate a beam identifier and/or a cell identifier of the candidate PSCell, so as to indicate a beam of a candidate PSCell corresponding to the second measurement result or indicates a candidate PSCell of the second measurement result.

A manner in which the UE screens the measurement results of the candidate PSCells is: For example, if a measurement result of a candidate PSCell meets a second reporting condition, the UE sends the measurement result of the candidate PSCell to the source MN. If a measurement result of a PSCell does not meet the second reporting condition, the UE does not send the measurement result of the candidate PSCell to the source MN. The second reporting condition is a reporting condition of a candidate PSCell. For example, the second reporting condition is that a value of a measurement result of a candidate PSCell is greater than a first threshold, the first threshold, for example, corresponds to a second parameter, and the second parameter is, for example, RSRP or RSRQ. The first parameter and the second parameter may be the same or different, and the first threshold and the second threshold may be the same or different. For example, the first threshold is determined by the UE, or is configured by a network, or is preconfigured in the UE, or may be predefined in a protocol. Based on the second reporting condition, the UE may not necessarily send a poor measurement result of a candidate PSCell to the source MN, to send less redundant information and reduce signaling overheads.

For another example, the second reporting condition is that a measurement result of a candidate PSCell meets a first selection condition. For example, the first information further indicates H first selection conditions. Each first selection condition is a selection condition of one candidate PSCell, and H is an integer greater than or equal to 1. In this case, the UE may determine a selection condition of a candidate PSCell. If the UE obtains a measurement result of a candidate PSCell, the UE may determine, based on the first selection condition, whether to report the measurement result of the candidate PSCell. If the measurement result meets the first selection condition of the candidate PSCell, the UE may send the measurement result of the candidate PSCell to the source MN. If the measurement result does not meet the first selection condition of the candidate PSCell, there is a low probability that the source MN determines the candidate PSCell as a target candidate PSCell of the UE, and the UE may not send the measurement result of the candidate PSCell to the source MN, to reduce invalid information received by the source MN and reduce transmission overheads.

Optionally, the UE reports a measurement result of a candidate PSCell only when a measurement result of a candidate PCell corresponding to the candidate PSCell meets the first reporting condition. For example, the UE determines, based on a correspondence between a candidate PSCell and a candidate PCell indicated by the first information, that a candidate PSCell 1 corresponds to a candidate PCell 1, and reports a measurement result of the candidate PSCell 1 only when a measurement result of the candidate PCell 1 meets the first reporting condition.

Reporting and sending of the first measurement result or the second measurement result are not limited in this application. For example, the UE may periodically send the first measurement result or the second measurement result to the source MN, or the UE may send the first measurement result or the second measurement result to the source MN when an event is triggered. A manner in which the UE sends the first measurement result or the second measurement result may be indicated by the source MN. For example, the source MN indicates, in configuration information, a manner in which the UE sends the measurement result, or the source MN may indicate, to the UE by using another message, a manner in which the UE sends the measurement result. The first measurement result or the second measurement result may be carried in layer 1 control information or layer 2 control information.

S204: The source MN sends a handover command to the UE. Correspondingly, the UE receives the handover command from the source MN.

The handover command may indicate the UE to be handed over to a target candidate PCell. The target candidate PCell is one of the M candidate PCells. The UE can be handed over to the target candidate PCell based on the handover command. A prerequisite for sending the handover command is that a measurement result of the target candidate PCell is good, or the measurement result of the target candidate PCell can meet a selection condition of the target candidate PCell, or the measurement result of the target candidate PCell is better than a measurement result of a PCell (a PCell provided by the source MN) currently accessed by the UE. However, if one or more of the following conditions are met, the source MN may not send the handover command: measurement results of the M candidate PCells are all poor, none of the measurement results of the M candidate PCells meet a corresponding candidate PCell selection condition, or all measurement results of the M candidate PCells are worse than a measurement result of the candidate PCell (a PCell provided by the source MN) currently accessed by the UE. Optionally, the handover command may carry an identifier of the target candidate PCell, to indicate the target candidate PCell. Optionally, the handover command may carry a beam identifier of the target candidate PCell, to indicate a beam that is of the target candidate PCell and to which the UE is to be handed over or indicate a beam that is of the target candidate PCell and that the UE accesses.

In this embodiment of this application, a handover process is based on a layer 1 or a layer 2. Therefore, the handover command may be layer 1 signaling. For example, the handover command is carried on a physical downlink control channel (physical downlink control channel, PDCCH). Alternatively, the handover command may be layer 2 signaling, for example, a MAC control element (MAC control element, MAC CE).

The source MN may select one of the M candidate PCells based on the first measurement result, and indicate the UE to access the candidate PCell. The candidate PCell is the target candidate PCell. For example, the source MN selects, from the M candidate PCells, one with a best measurement result as the target candidate PCell. Alternatively, the source MN may select the target candidate PCell from the M candidate PCells based on the first measurement result and the second measurement result. For example, the source MN considers a correspondence between a PCell and a PSCell. For example, measurement results of both a PCell A and a PCell B are good, but a measurement result of a PSCell corresponding to the PCell A is better than a measurement result of a PSCell corresponding to the PCell B. Considering that the UE may also need to perform a PSCell handover, the source MN may select the PCell A as the target candidate PCell. Alternatively, when selecting the target candidate PCell, the source MN may further consider other information in addition to the first measurement result (or the first measurement result and the second measurement result). The other information includes, for example, current network loads of a part or all of the M candidate PCells, or adaptation between geographical locations of a part or all of the M candidate PCells and a moving path of the UE. In this way, the selected target candidate PCell is more accurate and more suitable for access by the UE.

The handover command may further indicate the UE to be connected to a target candidate PSCell. The UE may be connected to the target candidate PSCell based on the handover command. Optionally, the handover command may carry a beam identifier of the target candidate PSCell, to indicate a beam that is of the target candidate PSCell and to which the UE is to be handed over or indicate a beam that is of the target candidate PSCell and that the UE accesses.

For example, the handover command includes first indication information. The first indication information may indicate the UE to be connected to the target candidate PSCell, and the target candidate PSCell includes one or more PSCells in the N candidate PSCells. For example, if the UE is currently in a DC state, there may be one target candidate PSCell; or if the UE is currently in an MC state, there may be two or more target candidate PSCells. Specifically, when the UE is in the DC state, the UE has one SN, the SN may provide one or more candidate PSCells for the UE, and the UE may be connected to one of the candidate PCells, to implement dual-connectivity communication. When the UE is in an MC state, the UE may have a plurality of SNs, and each SN may provide one or more candidate PSCells for the UE, so that the UE can be connected to one candidate PSCell provided by each SN, to implement multi-connectivity communication. For example, the first indication information includes an identifier of the target candidate PSCell, to indicate the target candidate PSCell. If the target candidate PSCell includes a source PSCell of the UE, namely, a PSCell to which the UE is connected before the current PCell handover, that the UE is connected to the target candidate PSCell means that the UE maintains a connection to the source PSCell. If the target candidate PSCell includes a new PSCell, namely, a PSCell to which the UE is not connected before the current PCell handover, that the UE is connected to the target candidate PSCell means that the UE accesses the new PSCell.

For example, the source MN selects one or more candidate PSCells from the N candidate PSCells based on the first measurement result, and indicates the UE to be connected to the one or more candidate PSCells. The one or more candidate PSCells are target candidate PSCells. For example, the source MN selects, from the M candidate PCells, one with a best measurement result as the target candidate PCell. In this case, the source MN further considers a correspondence between a PCell and a PSCell, and may select a PSCell corresponding to the target candidate PCell as the target candidate PSCell. In this way, the process of selecting the target candidate PSCell by the source MN can be simplified.

Alternatively, the source MN may select the target candidate PSCell from the N candidate PSCells based on the second measurement result. Alternatively, the source MN may select the target candidate PSCell from the N candidate PSCells based on the first measurement result and the second measurement result. Alternatively, when selecting the target candidate PSCell, the source MN may further consider other information in addition to the first measurement result and/or the second measurement result. The other information includes, for example, current network loads of a part or all of the N candidate PSCells, or adaptation between geographical locations of a part or all of the N candidate PSCells and a moving path of the UE. In this way, the selected target candidate PSCell is more accurate and more suitable for access by the UE.

Optionally, the target candidate PSCell has a correspondence with the target candidate PCell. For example, after determining the target candidate PCell, the source MN may determine whether a measurement result of a candidate PSCell having a correspondence with the target candidate PCell is good. For example, if a value of a measurement result of a candidate PSCell is greater than a third threshold, it is considered that the measurement result of the candidate PSCell is good; if a value of a measurement result of a candidate PSCell is not greater than the third threshold, it is considered that the measurement result of the candidate PSCell is poor. The third threshold corresponds to a third parameter, and the third parameter is, for example, reference signal received power (reference signal receiving power, RSRP) or reference signal received quality (reference signal receiving quality, RSRQ). If the measurement result of the candidate PSCell having a correspondence with the target candidate PCell is good, the source MN may determine the candidate PSCell as the target candidate PSCell. Alternatively, the source MN may determine whether the measurement result of the candidate PSCell having a correspondence with the target candidate PCell meets a second selection condition of the candidate PSCell. If the measurement result of the candidate PSCell having a correspondence with the target candidate PCell meets the second selection condition of the candidate PSCell, the source MN may determine the candidate PSCell as the target candidate PSCell. If the target candidate PSCell has a correspondence with the target candidate PCell, optionally, the first indication information includes an identifier of the target candidate PSCell. Alternatively, if the first information indicates an index of at least one correspondence, the first indication information may also include an index of the correspondence between the target candidate PSCell and the target candidate PCell, and the index may also indicate the target candidate PSCell, and may further indicate the target candidate PCell.

Optionally, the UE is handed over to the target candidate PCell based on the handover command. For example, the UE performs a random access procedure with the target candidate PCell. If the handover command further indicates the target candidate PSCell, the UE may also perform a random access procedure with the target candidate PSCell. The UE performs a random access procedure with the target candidate PCell, and the UE performs a random access procedure with the target candidate PSCell. The two random access procedures may be performed simultaneously, or the UE may first access the PCell and then access the PSCell.

By performing S203 and S204, the source master network device may determine the target candidate primary cell, which means that the source master network device has a decision right to select the target candidate primary cell, so that a selection result is more accurate, and a proper target candidate primary cell is selected for the UE, to improve communication quality of the UE in the target candidate primary cell. In addition, because a selection result is accurate, a process in which reselection is required because the selected target candidate primary cell is improper is reduced, and communication efficiency of the UE can be improved. In addition, when the UE is handed over to a PCell, dual-connectivity communication can still be maintained, to improve a data throughput.

Alternatively, in another implementation of this application, the UE may determine the target candidate cell, and the source master network device does not need to select the target candidate cell. For example, S203 and S204 may be replaced with the following step: The UE determines the target candidate PCell (or selects the target candidate PCell and the target candidate PSCell) based on the first measurement result (or the first measurement result, the second measurement result, and the like). In this implementation, the UE may not need to report the measurement result to the source master network device, but may select the target candidate cell based on the measurement result. This can reduce transmission overheads, and can also improve handover efficiency because a reporting process is reduced.

Optionally, if the UE successfully selects the target candidate PSCell, after selecting the target candidate PSCell, the UE may send third indication information to the source MN. The third indication information may indicate that the UE is to access the target candidate PSCell.

Optionally, in another implementation of this application, after the UE is handed over to the PCell, the UE may no longer maintain dual-connectivity communication. In this implementation, the handover command may not indicate the UE to be connected to the target candidate PSCell. For example, if the source MN determines that measurement results of all candidate PSCells corresponding to the target candidate PCell are poor (for example, none of values of measurement results of PSCells included in the second measurement result meet a selection threshold), and/or determines that none of measurement results of candidate PSCells corresponding to the target candidate PCell meet corresponding second selection conditions, the source MN may not determine the target candidate PSCell for the UE. In this case, the handover command may only indicate the UE to be handed over to the target candidate PSCell, but does not indicate the UE to be connected to the target candidate PSCell. For example, if the handover command does not include the first indication information, or the handover command includes fourth indication information, and the fourth indication information indicates the UE not to be connected to the target candidate PSCell, the UE enters a single-connectivity state after the handover. Alternatively, in another possibility, although the handover command does not indicate the target candidate PSCell, the UE may select one candidate PSCell from the N candidate PSCells as the target candidate PSCell based on the first measurement result. Alternatively, the UE may select one candidate PSCell from the N candidate PSCells as the target candidate PSCell based on the first measurement result and the second measurement result. Optionally, when selecting the target candidate PSCell, the UE may further refer to the first selection condition. The UE may successfully select or may fail to select the target candidate PSCell. For example, if all measurement results of the N candidate PSCells are poor, and/or none of the measurement results of the N candidate PSCells meet respective first selection conditions, the UE fails to select the target candidate PSCell, and the UE cannot access the target PSCell, and enters the single-connectivity state. In short, if the handover command does not indicate the target candidate PSCell, or the handover command does not indicate a PSCell and the UE does not select the target candidate PSCell, or the UE fails to select the target candidate PSCell, the UE may not access the PSCell. This means that the UE enters the single-connectivity state. In this implementation, the UE may flexibly switch from dual-connectivity communication to single-connectivity communication based on a signal quality condition, to save base station resources and not affect communication quality.

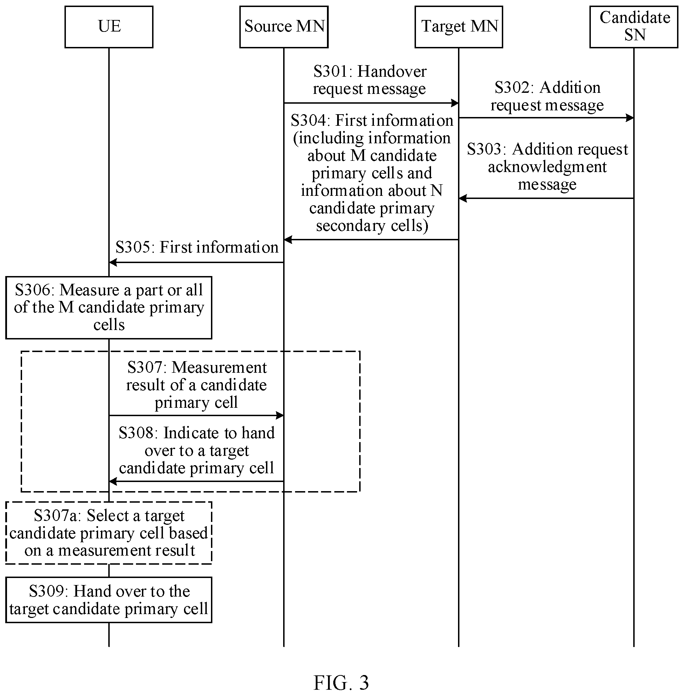

To better understand the solution provided in the embodiment shown in FIG. 2, the following further provides a communication method. The method may be considered as a specific example of the embodiment shown in FIG. 2. For a procedure of the communication method, refer to FIG. 3. In the embodiment shown in FIG. 3, a source master network device is, for example, the master node 1 in FIG. 1C, a source secondary network device is, for example, the secondary node 1 in FIG. 1C, a target master network device (namely, a network device on which a target candidate primary cell is located) is, for example, the master node 2 in FIG. 1C, and a network device on which a target candidate primary secondary cell is located is, for example, the secondary node 1 or the secondary node 2 in FIG. 1C. In addition, in the following description process, the master network device is referred to as an MN. For example, the source master network device is referred to as a source MN, and the target master network device is referred to as a target MN. The secondary network device is referred to as an SN, and a plurality of secondary network devices are distinguished in an expression manner such as an SN 1, an SN 2, ..., and the like.

S301: The source MN sends a handover request message to the target MN. Correspondingly, the target MN receives the handover request message from the source MN. The handover request message may be used to request to hand over UE from the source MN to the target MN.

Optionally, the handover request message may include second indication information. The second indication information may indicate that a current handover process is a layer (layer, L) 1 or layer 2-based handover process, or indicate that the UE is to be handed over to the target candidate primary cell through a layer 1 or layer 2-based handover process. In other words, the MN handover process in this embodiment of this application may be a layer 1 or layer 2-based handover process.

Optionally, the handover request message may not necessarily notify the target MN that the UE is to be handed over to the target MN immediately, but requests the target MN to allocate a resource to the UE in advance. Therefore, the target MN may also be referred to as a candidate MN. The source MN may send the handover request message to at least one candidate MN.

Optionally, the handover request message may carry information about a target PCell (which may also be referred to as a candidate PCell) provided by the target MN, for example, an identifier of a PCell. That is, the source MN determines a PCell provided by the target MN for handover. Even for a same target MN, because the source MN may determine a plurality of candidate PCells provided by the target MN, the source MN may send a plurality of handover request messages to the same target MN, and each handover request message includes information about one candidate PCell; or the source MN may send only one handover request message to the target MN, and the handover request message includes information about the plurality of candidate PCells.

Information about the source SN includes, for example, an identifier of the source SN, and optionally, further includes an identifier of the UE under the source SN. An identifier of the UE under an SN is, for example, an identifier allocated by the SN to the UE, for example, an Xn application protocol (Xn application protocol, XnAP) ID or an X2 application protocol (X2 application protocol, X2AP) ID allocated by the SN to the UE. Information about a PSCell includes, for example, an identifier of the PSCell, and optionally, further includes an identifier of the UE in the PSCell, for example, a cell radio network temporary identifier (cell radio network temporary identifier, C-RNTI) of the UE in the PSCell.

In this embodiment of this application, an SN accessed by the UE before a handover (namely, an SN accessed by the UE when the UE accesses the source MN, which is referred to as a source SN for short) may also be used as a candidate SN determined by the target MN. Therefore, optionally, the handover request message may further include information about the source SN, or the handover request message may further include information about a PSCell provided (or determined) by the source SN for the UE. There may be one or more source SNs. The handover request message includes the information about the source SN, so that the target MN can obtain the information about the source SN of the UE, and the target MN can also include the source SN in a range of candidate SNs. Alternatively, the handover request message includes the information about the PSCell provided by the source SN for the UE, so that the target MN can obtain the information about the PSCell provided by the source SN of the UE for the UE, and the target MN can also include the source SN in the range of candidate SNs. In this way, the candidate SN determined by the target MN may include the source SN. If the UE still accesses the source SN after an MN handover, the UE can keep the SN unchanged after the MN handover.

S302: The target MN sends an addition request message to an SN 1. Correspondingly, the SN 1 receives the addition request message from the target MN. The addition request message may also be referred to as an SN addition request message, and is used to request to add the SN 1 as an SN of the UE.

The SN 1 is, for example, an SN determined by the target MN, and the SN 1 may be understood as a candidate SN. The target MN may determine at least one candidate SN for the UE, and the SN 1 is, for example, one of the at least one candidate SN. For example, the target MN may send the addition request message to each of a part or all of the at least one candidate SN. Because processes are similar, interaction between the target MN and the SN 1 is used as an example in S302. Because the target SN has obtained the information about the source SN of the UE from the source MN, the at least one candidate SN determined by the target MN for the UE may include the source SN, or may not include the source SN. If the at least one candidate SN includes the source SN, the SN 1 may be the source SN of the UE, or may not be the source SN of the UE. If the SN 1 is the source SN of the UE, the SN 1 is, for example, the secondary node 1 in FIG. 1C; or if the SN 1 is not the source SN of the UE, the SN 1 is, for example, the secondary node 2 in FIG. 1C. In addition, if the SN 1 is the source SN of the UE, in an optional manner, the addition request message may further include an identifier of the UE under the SN 1.

Optionally, the addition request message includes fourth indication information. The fourth indication information indicates that the addition request message is a layer 1 or layer 2-based addition request message, or indicates that the current SN addition process is a layer 1 or layer 2-based addition process, or indicates that the UE is to be handed over to the target candidate primary cell through a layer 1 or layer 2-based handover process.

Optionally, the addition request message is not necessarily used to notify the SN 1 that the UE accesses the SN 1 immediately, but requests the SN 1 to allocate a resource to the UE in advance.

S303: The SN 1 sends an addition request acknowledgment message to the target MN. Correspondingly, the target MN receives the addition request acknowledgment message from the SN 1.

After receiving the addition request message, the SN 1 may determine information about an SCG allocated to the UE. The information about the SCG includes, for example, parameter information of the SCG. For example, the parameter information of the SCG includes one or more of parameters such as a cell group identifier, a radio link control (radio link control, RLC) configuration parameter, a MAC layer configuration parameter, or a physical layer configuration parameter. Optionally, the information about the SCG further includes information about a PSCell corresponding to the SCG, for example, an identifier of the PSCell. The SN 1 may include the information about the SCG determined for the UE in the addition request acknowledgment message. For example, if the SN 1 determines one or more SCGs for the UE, the SN 1 may include information about the one or more SCGs in the addition request acknowledgment message.

S304: The target MN sends first information to the source MN. Correspondingly, the source MN receives the first information from the target MN. For example, the first information is carried in a handover request acknowledgment message, or the first information may be carried in another message.

For S304, refer to S201 in the embodiment shown in FIG. 2. Therefore, for descriptions of content included in the first information, refer to related descriptions in S201.

Optionally, a quantity of candidate PCells indicated by a handover request message may be greater than or equal to a quantity of candidate PCells indicated by a handover request acknowledgment message corresponding to the handover request message. For example, if the handover request message carries information about A candidate PCells, M≤A. That is, the target MN selects some candidate PCells from a candidate PCell list sent by the source MN. If the source MN sends a plurality of handover request messages to the target MN, the target MN may also send a plurality of handover request acknowledgment messages to the source MN.

M candidate PCells are determined by the target MN for the UE. For example, the M candidate PCells are determined by the target MN based on candidate PCells provided by the source MN in the handover request message. N candidate PSCells are determined by at least one SN for the UE. For example, the N candidate PSCells are provided by the at least one SN, and each SN provides one or more candidate PSCells. The at least one SN is the SN determined by the target MN for the UE described above. The target MN may send information about the M candidate PCells and information about the N candidate PSCells to the source MN. The M candidate PCells may be used as candidate PCells of the UE, and the N candidate PSCells may be used as candidate PSCells of the UE. Because the target MN obtains the information about the source SN of the UE (or the information about the PSCell provided by the source SN), the target MN may consider including the source SN into a range of candidate SNs, so that the SN may change or may be unchanged during an MN handover of the UE. Selection of the SN is more flexible. Communication quality is improved by selecting an SN suitable for a communication condition of the UE.

Optionally, the first information may further indicate at least one correspondence. One correspondence is a correspondence between one candidate PCell and one or more candidate PSCells, or one correspondence may indicate that one candidate PCell has no corresponding candidate PSCell. In this case, at least one correspondence may be configured for at least one candidate PCell, one correspondence may be configured for one candidate PCell, and the at least one candidate PCell is a part or all of the M candidate PCells. In the M candidate PCells, if only a part of the candidate PCells have a correspondence with candidate PSCells, for remaining candidate PCells that have no correspondence with candidate PSCells, the first information may include information about these candidate PCells, but does not indicate a correspondence between these candidate PCells and corresponding candidate PSCells. If each of the M candidate PCells has a correspondence with a candidate PSCell, the first information may indicate the correspondence for each of the M candidate PCells. Optionally, the correspondence may be indicated by including information about the candidate PSCell in information about the candidate PCell. For example, information about a candidate PCell is included in an RRC reconfiguration message #1 generated by a candidate MN for the candidate PCell, and information about a candidate PSCell is an RRC reconfiguration message #2 generated by a candidate SN for the candidate PSCell. In this case, a correspondence between the candidate PCell and the candidate PSCell may be reflected by using the RRC reconfiguration message #1 including the RRC reconfiguration message #2. Optionally, one candidate PCell may have a correspondence with one or more candidate PSCells, or may have a correspondence that indicates that there is no corresponding candidate PSCell. For example, for a candidate PCell 1, the first information may include three types of information: information about the candidate PCell 1, information about a candidate PSCell 1, and a correspondence; information about the candidate PCell 1, information about a candidate PSCell 2, and a correspondence; and information that indicates there is no candidate PSCell. Optionally, in three cases: a combination of the candidate PCell 1 and the candidate PSCell 1, a combination of the candidate PCell 1 and the candidate PSCell 2, and there is the candidate PCell 1 but no candidate PSCell, information about the candidate PCell 1 may be different.

For example, the first information further includes a first index of at least one correspondence. If there are two or more correspondences, a node (for example, the target MN or the source MN) that determines the correspondences may separately set a first index for at least one correspondence. One correspondence corresponds to one first index, and at least one first index is set in total. Optionally, the first information may be carried in the handover request acknowledgment message in a form of a container (container), and the source MN may not interpret content in the container. Further, in the handover request acknowledgment message, the target MN may send, to the source MN, a second index that indicates the at least one correspondence (for example, the second index is carried outside the first information), and the second index also indicates the at least one correspondence, or the second index may indicate the at least one first index. The source MN may interpret the second index. When the source MN determines, in a subsequent step, to indicate the UE to be handed over to a candidate PCell and a candidate PSCell, the source MN may send a second index of a correspondence between the candidate PCell and the candidate PSCell to the UE, so that the UE learns, based on the second index, a candidate PCell and a candidate PSCell to which the UE is to be handed over.

The correspondence between the candidate PCell and the candidate PSCell is, for example, determined by the target MN. When determining the correspondence between the candidate PCell and the candidate PSCell, the target MN may not learn information such as signal quality of the candidate PCell and the candidate PSCell when the UE accesses the candidate PCell. Therefore, to cover a wider range, the target MN may combine each of the M candidate PCells and each of the N candidate PSCells once, and each combination is considered as a correspondence. For example, M=2, N=3, the M candidate PCells include a PCell 1 and a PCell 2, and the N candidate PSCells include a PSCell 1, a PSCell 2, and a PSCell 3. In this case, the PCell 1 and the PSCell 1 may form a correspondence, the PCell 1 and the PSCell 2 may form a correspondence, the PCell 1 and the PSCell 3 may form a correspondence, the PCell 2 and the PSCell 1 may form a correspondence, the PCell 2 and the PSCell 2 may form a correspondence, the PCell 2 and the PSCell 3 may form a correspondence, the PCell 1 and no PSCell may form a correspondence, and the PCell 2 and no PSCell may form a correspondence. The target MN may determine eight correspondences in total. Alternatively, the correspondence between the candidate PCell and the candidate PSCell may also be determined by the source MN. This is not limited herein.

In addition, optionally, the handover request acknowledgment message further includes H first selection conditions. For example, the first information further indicates the H first selection conditions (the H first selection conditions may be a same feature as the H first selection conditions in the embodiment shown in FIG. 2), or the H first selection conditions are not included in the first information or are not indicated by using the first information, but are included in the handover request acknowledgment message, or indicated by using the handover request acknowledgment message. Each first selection condition corresponds to one candidate PSCell, or in other words, each first selection condition is a selection condition of one candidate PSCell. H is an integer greater than or equal to 1. First selection conditions of different candidate PSCells may be the same or may be different. In this case, the H first selection conditions correspond to H candidate PSCells, and the H PSCells may be a part or all of the N candidate PSCells. A selection condition of a candidate PSCell may include a priority condition and/or a parameter condition (or a threshold condition). The priority condition is a priority of selecting the candidate PSCell. For example, if a priority of a candidate PSCell is higher, the source MN (or the UE) is more inclined to select the candidate PSCell as a target candidate PSCell. The parameter condition is, for example, represented as a threshold, and the threshold is a threshold that needs to be met for selecting the candidate PSCell. The threshold, for example, corresponds to a parameter (or corresponds to a plurality of parameters, where an example in which the threshold corresponds to one parameter is used herein). If a value of the parameter obtained by the UE by measuring a candidate PSCell is greater than or equal to the threshold, the candidate PSCell can be selected; if a value of the parameter obtained by the UE by measuring a candidate PSCell is less than the threshold, the candidate PSCell cannot be selected. The parameter includes, for example, RSRP or RSRQ. The parameter condition also reflects signal quality. Signal quality of a PSCell may be layer 1 signal quality of the PSCell and layer 3 signal quality of the PSCell (the layer 1 signal quality of the PSCell may be a layer 1 measurement result obtained by the UE by measuring the candidate PSCell). For example, the UE measures a beam of a candidate PSCell at a physical layer (for example, a reference signal of the candidate PSCell), and the reference signal includes, for example, a beam measurement result or a cell measurement result obtained by measuring an SSB or a CSI-RS. The layer 3 signal quality of the PSCell may be a layer 3 measurement result obtained by the UE by measuring the candidate PSCell. For example, the UE performs comprehensive processing at a layer 3 based on a measurement result of each beam obtained through measurement of a reference signal of the candidate PSCell at the physical layer, to obtain a measurement result of the cell; or further, the UE performs filtering at the layer 3 based on a measurement result of the cell obtained at each moment, to obtain the layer 3 measurement result of the cell. The UE can access a candidate PSCell with good signal quality based on parameter conditions.

Optionally, the handover request acknowledgment message may further include L second selection conditions. For example, the first information further indicates the L second selection conditions (the L second selection conditions may be a same feature as the L second selection conditions in the embodiment shown in FIG. 2), or the L second selection conditions are not included in the first information or are not indicated by using the first information, but are included in the handover request acknowledgment message or indicated by using the handover request acknowledgment message. Each second selection condition corresponds to one candidate PCell, or each second selection condition is a selection condition of one candidate PCell. L is an integer greater than or equal to 1. Second selection conditions of different candidate PCells may be the same or may be different. In this case, the L second selection conditions correspond to L candidate PCells, and the L candidate PCells may be a part or all of the M candidate PCells. A selection condition of a candidate PCell may include a priority condition and/or a parameter condition. The priority condition is a priority of selecting the candidate PCell. For example, if a priority of a candidate PCell is higher, the source MN (or the UE) is more inclined to select the candidate PCell as a target candidate PCell. The parameter condition is, for example, represented as a threshold, and the threshold is a threshold that needs to be met for selecting the candidate PCell. The threshold, for example, corresponds to a parameter (or corresponds to a plurality of parameters, where an example in which the threshold corresponds to one parameter is used herein). If a value of the parameter obtained by the UE by measuring a candidate PCell is greater than or equal to the threshold, the candidate PCell can be selected; if a value of the parameter obtained by the UE by measuring a candidate PCell is less than the threshold, the candidate PCell cannot be selected. The parameter includes, for example, RSRP or RSRQ. The parameter indicated by the second selection condition may be the same as or different from the parameter indicated by the first selection condition. Even if the parameters are the same, corresponding thresholds may be the same or different. The parameter condition also reflects signal quality. Signal quality of a PCell may be layer 1 signal quality of the PCell and layer 3 signal quality of the PCell (the layer 1 signal quality of the PCell may be a layer 1 measurement result obtained by the UE by measuring the candidate PCell). For example, the UE measures a beam of a candidate PCell at a physical layer (for example, a reference signal of the candidate PCell), and the reference signal includes, for example, a beam measurement result or a cell measurement result obtained by measuring an SSB or a CSI-RS. The layer 3 signal quality of the PCell may be a layer 3 measurement result obtained by the UE by measuring the candidate PCell. For example, the UE performs comprehensive processing at a layer 3 based on a measurement result of each beam obtained through measurement of a reference signal of the candidate PCell at the physical layer, to obtain a measurement result of the cell; or further, the UE may perform filtering at the layer 3 based on a measurement result of the cell obtained at each moment, to obtain the layer 3 measurement result of the cell. The UE can access a candidate PCell with good signal quality based on parameter conditions.

The at least one first selection condition is sent to the target MN by an SN that provides these candidate PSCells. For example, if these candidate PSCells include a candidate PSCell provided by the SN 1, the SN 1 may send, in the addition request acknowledgment message in S303, a first selection condition of the candidate PSCell provided by the SN 1 to the target MN. Alternatively, the at least one first selection condition may be determined by the target MN. The one or more second selection conditions may be determined by the target MN.

S305: The source MN sends configuration information to the UE. Correspondingly, the UE receives the configuration information from the source MN. The configuration information includes, for example, the first information.

Optionally, S305 may include: The source MN forwards the first information to the UE, where the configuration information is the first information; or S305 may include: The source MN sends the configuration information to the UE, where the configuration information may include the first information. In addition, the configuration information may further include other information. Optionally, the first information is included in one or more containers (container) in the configuration information.

For more descriptions of step S305, refer to step S202 in the embodiment shown in FIG. 2.

S306: The UE measures a part or all of the M candidate PCells.

Optionally, the UE may further measure a part or all of the N candidate PSCells.

S307: The UE sends a measurement result of a candidate PCell to the source MN. Correspondingly, the source MN receives the measurement result.

For specific descriptions of measuring a candidate PCell by the UE and a manner of reporting a measurement result, refer to related content in step S203 in the embodiment shown in FIG. 2.

S308: The source MN sends a handover command to the UE.

Specifically, the source MN selects, based on the measurement result reported by the UE, a candidate PCell as a target candidate PCell to which the UE is handed over.

For specific descriptions of the handover command, refer to related content in step S204 in the embodiment shown in FIG. 2.

As described in the embodiment shown in FIG. 2, the source master network device may select the target candidate PCell for the UE, or the UE may select the target candidate PCell. In this embodiment of this application, an example in which the UE selects the target candidate PCell is used. Therefore, S307 and S308 may be replaced with S307a: The UE selects the target candidate PCell based on a first measurement result. Alternatively, the UE selects the target candidate PCell based on a first measurement result and a second measurement result. For descriptions of content such as the first measurement result and the second measurement result, refer to the embodiment shown in FIG. 2.

For example, the UE may select one candidate PCell from the M candidate PCells as the target candidate PCell based on the second selection condition and the first measurement result (or the first measurement result and the second measurement result). Optionally, after selecting the target candidate PCell, the UE may send third indication information to the source MN. The third indication information may indicate that the UE is to access the target candidate PCell.

Optionally, the UE may further select a target candidate PSCell. For example, the UE may select one candidate PSCell from the N candidate PSCells as the target candidate PSCell based on the first selection condition and the first measurement result and/or the second measurement result. Optionally, the UE may select the target candidate PSCell after selecting the target candidate PCell. There is a correspondence between the target candidate PSCell and the target candidate PCell. The UE may successfully select or may fail to select the target candidate PSCell. For example, if all measurement results of the N candidate PSCells are poor, and/or none of the measurement results of the N candidate PSCells meet respective first selection conditions, the UE fails to select the target candidate PSCell. If the UE successfully selects the target candidate PSCell, the third indication information further indicates that the UE is to access the target candidate PSCell.

S309: The UE is handed over to the target candidate primary cell.

Optionally, when S307 and S308 are performed, the UE is handed over to the target candidate primary cell indicated in the handover command. In addition, the UE is further connected to the target candidate PSCell based on the handover command.

Optionally, when S307a is performed, the UE is handed over to the target candidate PCell selected by the UE. In addition, the UE may be connected to the target candidate PSCell selected by the UE, or disconnect from a source PSCell, to perform single-connectivity communication.

For example, the UE performs a random access procedure with the target candidate PCell. If the handover command further indicates the target candidate PSCell by using first indication information, the UE may also perform a random access procedure with the target candidate PSCell. If the UE does not select the target candidate PSCell, the UE may not access the PSCell, which means that the UE enters a single-connectivity state.

Optionally, after successfully accessing the target candidate PCell, the UE may send indication information to the target candidate PCell. The indication information is referred to as, for example, the third indication information, and may indicate that the UE is to access the target candidate PSCell (or indicate that the UE is to be connected to the target candidate PSCell), or indicate that the UE has accessed the target candidate PSCell, or indicate that the UE has received a command for accessing the target candidate PSCell. Optionally, the third indication information may carry an identifier of the target candidate PSCell. In this way, it is convenient for the target MN to configure information about the target candidate PCell for the UE. For example, the target MN can quickly determine, based on the third indication information, the target candidate PSCell accessed by the UE. Therefore, the target MN can confirm information about a candidate PCell corresponding to the target candidate PSCell, and the target MN can correctly configure the information about the candidate PCell, to improve communication efficiency of the UE.

Optionally, after the UE successfully accesses the target candidate PSCell, the target candidate PSCell may send access indication information to the target candidate PCell. The access indication information may indicate that the UE has successfully accessed the target candidate PSCell. For example, the access indication information may carry the identifier of the target candidate PSCell. In this way, it is convenient for the target candidate PCell to configure the information about the target candidate PCell for the UE. For example, the target candidate PCell can quickly determine, based on the access indication information, the target candidate PSCell accessed by the UE. Therefore, the target candidate PCell can correctly configure information about the target candidate PSCell, to improve communication efficiency of the UE.

Optionally, in the embodiment shown in FIG. 3, after successfully accessing the target candidate PCell, the UE may also send indication information to the target candidate PCell. Details are not described. Optionally, in the embodiment shown in FIG. 3, after the UE successfully accesses the target candidate PSCell, the target candidate PSCell may also send the access indication information to the target candidate PCell. Details are not described. In conclusion, mutual reference may be made to content of the embodiment shown in FIG. 2 and content of the embodiment shown in FIG. 3.

Next, a question is considered. In the MC or DC scenario, the UE may perform a PCell handover, and may further perform a PSCell handover. In the MC scenario, the UE may be handed over from one or more connected PSCells. A PSCell handover is used as an example. If an SN corresponding to a PSCell changes, a source SN needs to transfer data (including uplink data and/or downlink data) of an SN terminated bearer corresponding to the UE to a target SN. Before transferring the data, the source SN needs to learn a tunnel address corresponding to data transfer allocated by the target SN to the SN terminated bearer. In other words, the source SN and the target SN need to first perform control plane interaction, to obtain a tunnel address corresponding to data transfer allocated by the target SN, to transfer the data to the target SN. However, in a PSCell handover (or PSCell change) scenario, if a source SN and a target SN need to perform interaction (that is, control plane signaling interaction) during each SN handover to obtain a tunnel address corresponding to data transfer, performance of the PSCell handover is affected, for example, a handover delay is increased. If an MN changes due to a PCell handover, the same problem may also be involved.

In view of this, an embodiment of this application provides still another communication method. In the method, a target network device may first send address information of the target network device to a source network device, so that when data needs to be transferred, the address information of the target network device does not need to be obtained through control plane signaling interaction, to improve handover efficiency of a PCell or a PSCell, and reduce a handover delay, or improve addition efficiency of a PSCell, and reduce a delay of adding a PSCell.

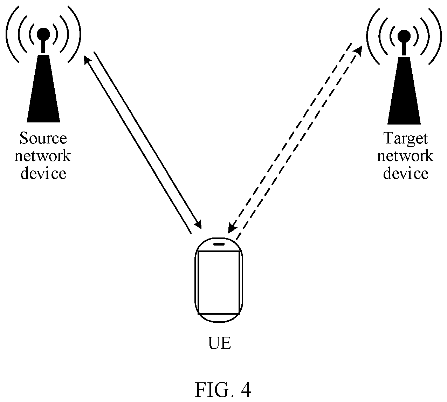

The method may be applied to a single-connectivity scenario. Refer to FIG. 4. UE communicates with a base station 1, and the base station 1 is a source base station of the UE. The UE may need to be handed over from the base station 1 to a base station 2, and the base station 2 is a target base station of the UE. If the technical solution in this embodiment of this application is applied to the scenario shown in FIG. 4, a source network device described below is, for example, the base station 1 in FIG. 4, and a target network device described below is, for example, the base station 2 in FIG. 4.

Alternatively, the method may be applied to an MC scenario or a DC scenario. In the MC or DC scenario, the method may be applied to a PCell handover process. The source network device described below is, for example, a source master network device of the UE, namely, a source MN, and the target network device described below is, for example, a target master network device of the UE, namely, a target MN. Alternatively, the method may be applied to a PSCell handover process. The source network device described below is, for example, a source secondary network device of the UE, namely, a source SN, and the target network device described below is, for example, a target secondary network device of the UE, namely, a target SN. Alternatively, the method may be applied to a PSCell handover process. The source network device described below is, for example, a master network device of the UE, namely, an MN, and the target network device described below is, for example, a target secondary network device of the UE, namely, a target SN. Alternatively, the method may be applied to a PSCell addition process. The source network device described below is, for example, a master network device of the UE, namely, an MN, and the target network device described below is, for example, a target secondary network device of the UE, namely, a target SN. When the method is applied to the MC or DC scenario, because a PCell handover or a PSCell handover is separately discussed, FIG. 4 may also be used as a schematic diagram of a scenario of the method. For example, if the method relates to a PCell handover, the base station 1 in FIG. 4 may be considered as a source MN, and the base station 2 may be considered as a target MN. For another example, if the method relates to a PSCell handover, the base station 1 in FIG. 4 may be considered as a source SN, and the base station 2 may be considered as a target SN. For another example, if the method relates to a PSCell handover, the base station 1 in FIG. 4 may be considered as an MN, and the base station 2 may be considered as a target SN. For another example, if the method relates to a PSCell addition process, the base station 1 in FIG. 4 may be considered as an MN, and the base station 2 may be considered as an SN.

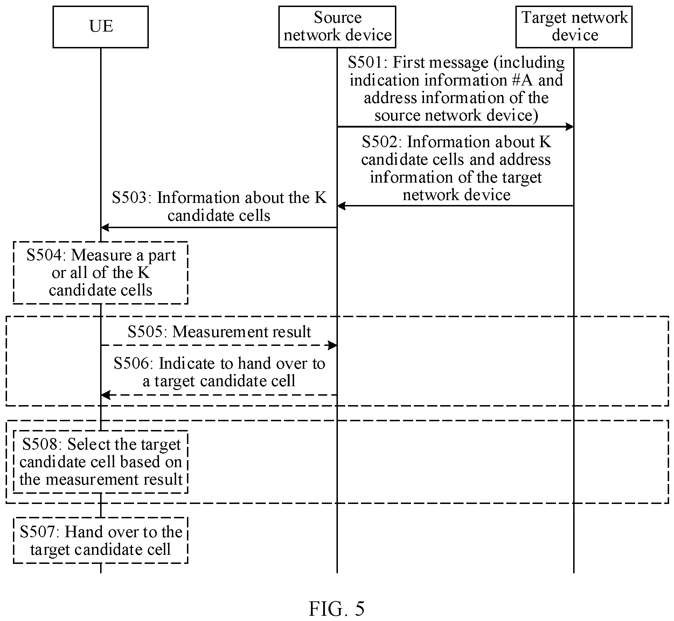

FIG. 5 is a flowchart of the method.

S501: The source network device sends a first message to the target network device. Correspondingly, the target network device receives the first message from the source network device. The first message may request to hand over the UE to the target network device.

The first message includes indication information #A, and the indication information #A may indicate that a current handover process is a layer 1 or layer 2-based handover process, or indicate that the UE is to be handed over to the target network device through a layer 1 or layer 2-based handover process. In addition, the first message further includes address information of the source network device, and the address information of the source network device may be used by the target network device to subsequently migrate data to the source network device. The address information of the source network device is, for example, tunnel address information of the source network device, and includes, for example, a port number and/or an internet protocol (internet protocol, IP) address of the source network device. The address information of the source network device may be address information for a DRB (that is, different DRBs established on the source network device have different address information), or may be address information for a protocol data unit (protocol data unit, PDU) session (that is, different PDU sessions established on the source network device have different address information). Optionally, the address information of the source network device is further distinguished in uplink and downlink. That is, the address information of the source network device included in the first message may include uplink address information of the source network device and/or downlink address information of the source network device. In addition to the indication information #A and the address information of the source network device, the first message may further include other information. This is not limited herein.

It should be noted that, in this embodiment of this application, a layer 1 or layer 2-based handover process includes a layer 1 or layer 2-based PCell handover process, a layer 1 or layer 2-based PSCell handover process, or a layer 1 or layer 2-based PSCell addition process. For the layer 1 or layer 2-based PCell handover process, the first message may be a handover request message. For the layer 1 or layer 2-based PSCell addition process, the first message may be an SN addition request message. For the layer 1 or layer 2-based PSCell handover process, if the source network device is an MN and the target network device is a target SN, the first message may be an SN addition request message. If the source network device is a source SN and the target network device is a target SN, step S501 may be replaced with: The source network device sends information #A to the target network device. The information #A includes, for example, the indication information #A and the address information of the source network device. Correspondingly, the target network device receives the information #A from the source network device. For example, the source SN first sends an SN change required message (SN change required message) (including the information #A) to the MN, and then the MN sends an SN addition request message (including the information #A) to the target SN. It should be noted that the handover request message is not necessarily used to notify the target network device that the UE is to be handed over to the target network device immediately, but requests the target network device to allocate a resource to the UE in advance. Therefore, the target network device may be referred to as a candidate target network device. The source target network device may send the handover request message to at least one candidate target network device.

For example, if the source network device is an MN, and the target network device is a target SN, the target SN obtains address information of the MN. For example, the UE is handed over to the target SN, and then is handed over from the target SN to another SN. When the UE is handed over to the another SN, the target SN may migrate data of the UE to the another SN or migrate the data of the UE to the MN. Alternatively, the UE is handed over to the target SN, and then the MN releases a connection between the UE and the target SN, and does not hand over the UE to the another SN. In this case, the target SN may migrate the data of the UE to the MN. If the target SN needs to migrate the data of the UE to the MN, because the target SN has obtained the address information of the MN, the target SN does not need to perform control plane signaling interaction with the MN to obtain the address information of the MN. The target SN may migrate the data to the MN based on the address information of the MN obtained in this step, to reduce a handover delay and improve data migration efficiency.

For another example, if the source network device is a source MN, and the target network device is a target MN, the target MN obtains address information of the source MN. For example, the UE is handed over to the target MN. If the UE is subsequently handed over from the target MN back to the source MN (for example, the target MN may send a second handover command to the UE, and the second handover command may indicate the UE to be handed over to the source MN), the target MN may migrate the data of the UE to the source MN based on the address information of the source MN, and does not need to perform control plane signaling interaction with the source MN to obtain the address information, to reduce a handover delay and improve data migration efficiency.

For another example, if the source network device is a source SN, and the target network device is a target SN, the target SN obtains address information of the source SN. For example, the UE is handed over to the target SN. If the UE is subsequently handed over from the target SN back to the source SN (for example, the target SN may send a second handover command to the UE, and the second handover command may indicate the UE to be handed over to the source SN), the target SN may migrate the data of the UE to the source SN based on the address information of the source SN, and does not need to perform control plane signaling interaction with the source SN to obtain the address information, to reduce a handover delay and improve data migration efficiency.

Optionally, the first message may further include indication information #B, and the indication information #B may indicate that when the UE is handed over from the target network device back to the source network device, the target network device is allowed not to send a handover request message to the source network device. For example, the source network device is a source MN, and the target network device is a target MN. After the UE is handed over to the target MN, if the UE needs to be handed over back to the source MN, the target MN may not send a handover request message to the source MN, and the target MN may directly indicate the UE to be handed over to the source MN, to improve handover efficiency.

If the source network device is an MN, and the target network device is a target SN, the first message is, for example, an addition request message, or referred to as an SN addition request message. The addition request message may be used to request to add the target SN as an SN of the UE, or may be considered as a request to hand over the UE to the target SN.

If the source network device is a source MN, and the target network device is a target MN, the first message is, for example, a handover request message, and the handover request message may be used to request to hand over the UE to the target MN. Optionally, the handover request message may further include information such as an identifier of a source cell (for example, a source PCell) provided by the source MN.

Optionally, the target network device may initiate a layer 1 or layer 2-based handover to at least one network device other than the source network device. For a handover procedure, refer to the description in S201. The target network device may send the address information of the source network device to the at least one network device other than the source network device, so that during a handover from the at least one network device other than the source network device to the source network device, the at least one network device other than the source network device does not need to perform control plane signaling interaction with the source network device to obtain the address information, to improve handover efficiency.

S502: The target network device sends a second message to the source network device. Correspondingly, the source network device receives the second message from the target network device. The second message may be considered as a response to the first message.

The second message may include information #B, the information #B includes information about K candidate cells determined by the target network device for the UE, and K is a positive integer. For example, if the target network device is a target SN, the K candidate cells are, for example, K PSCells, and the K PSCells are, for example, provided by the target SN. In this case, it may also be considered that the information #B includes information about K SCGs, the information about the K SCGs includes information about K PSCells, and one SCG includes one PSCell. Therefore, information about one SCG includes information about one PSCell. For another example, if the target network device is a target MN, the K candidate cells are, for example, K PCells, and the K PCells are, for example, provided by the target MN. In this case, it may also be considered that the information #B includes information about K MCGs, the information about the K MCGs includes information about K PCells, and one MCG includes one PCell. Therefore, information about one MCG includes information about one PCell.

Optionally, for example, the information #B includes the information about the K SCGs. There may be a time limit for storing the information about the K SCGs on a target SN side. The time may be understood as valid time. Different SCG information may correspond to same or different valid time. When storage time of information about an SCG on the target SN side reaches or exceeds the valid time, the target SN releases the information about the SCG. That is, the information about the SCG is no longer reserved for the UE. Alternatively, when storage time of information about an SCG on the target SN side reaches or exceeds the valid time, and the UE has not accessed a PSCell corresponding to the SCG, the target SN releases the information about the SCG. That is, the information about the SCG is no longer reserved for the UE. In this case, resources can be used more properly. If the information #B includes the information about the K MCGs, an implementation may be similar, and details are not described again.

In addition, the second message further includes address information of the target network device, and the address information of the target network device may be used to migrate data to the target network device. For example, after the UE is handed over to the target network device, or after the source network device indicates the UE to be handed over to the target network device, the source network device may migrate data of the UE to the target network device based on the address information of the target network device. The address information of the target network device is, for example, tunnel address information of the target network device, and includes, for example, a port number and/or an IP address of the target network device. For example, the address information of the target network device is address information for a DRB, or address information for a PDU session. Optionally, the address information of the target network device is further distinguished in uplink and downlink. That is, the address information of the target network device included in the first message may include uplink address information of the target network device and/or downlink address information of the target network device. Optionally, after the UE is handed over back to the source network device subsequently, when the source network device indicates the UE to be handed over to the target network device again, the source network device may not need to request the address information of the target network device from the target network device, but may directly use the address information previously obtained from the target network device, to improve handover efficiency.

For example, the target network device is a target SN. After the UE is handed over to the target SN, or after the source network device indicates the UE to be handed over to the target SN, a source SN of the UE may migrate data of the UE to the target SN based on address information of the target SN, and/or the MN may migrate the data of the UE to the target SN based on the address information of the target SN. For another example, the target network device is a target MN. After the UE is handed over to the target MN, or after the source network device indicates the UE to be handed over to the target MN, a source MN may migrate data of the UE to the target MN based on address information of the target MN.

Optionally, after receiving the second message, the source network device may send the address information of the target network device, or send the information #B and the address information of the target network device to at least one network device other than the target network device. Network devices included in the at least one network device are not limited in this embodiment of this application. For example, the at least one network device is a target network device to which the UE may be subsequently handed over, and the at least one network device may be used as an SN of the UE or may be used as an MN of the UE. For example, the source network device is an MN, the target network device is a target SN, and the at least one network device includes a source SN of the UE. The source SN can obtain address information of the target SN. Therefore, after the UE is handed over to the target SN, the source SN may migrate the data of the UE to the target SN based on the address information of the target SN. For example, the source network device is an MN, the target network device is a target SN, and the at least one network device includes another candidate SN of the UE. The another candidate SN can obtain address information of the target SN, so that when the UE is handed over from the another candidate SN to the target SN, the another candidate SN may migrate the data of the UE to the target SN based on the address information of the target SN.

Optionally, when the target network device initiates a layer 1 or layer 2-based handover process to the at least one network device other than the source network device, the target network device may send, to the source network device, address information of the at least one network device obtained by the target network device from the at least one network device, so that when the source network device is handed over to the at least one network device, the source network device does not need to perform control plane signaling interaction with the at least one network device to obtain the address information, to improve handover efficiency.

Optionally, the information #B may further include selection conditions of the K candidate cells, and a selection condition of a candidate cell may be used to determine whether the candidate cell can be selected. A selection condition of a candidate cell may include a priority condition and/or a parameter condition. The priority condition is a priority of selecting the candidate cell. For example, a higher priority of a candidate cell indicates that the source network device (or the UE) is more inclined to select the candidate cell as a target candidate cell. The parameter condition is, for example, represented as a threshold, and the threshold, for example, corresponds to a first parameter. If a value of a first parameter obtained by the UE by measuring a candidate cell is greater than or equal to the threshold, a handover decision party (the handover decision party is a device that determines the candidate cell, for example, the source network device or the UE) can select the candidate cell; if a value of a first parameter obtained by the UE by measuring a candidate cell is less than the threshold, the candidate cell cannot be selected. The parameter condition reflects signal quality, and the signal quality may be layer 1 signal quality or layer 3 signal quality. For descriptions of concepts such as the layer 1 signal quality or the layer 3 signal quality, refer to the embodiment shown in FIG. 2 or FIG. 3. Through parameter conditions, the network side may select a candidate cell with good signal quality for the UE, or the UE may select a candidate cell with good signal quality.

Optionally, for the layer 1 or layer 2-based PCell handover process, the second message may be a handover request acknowledgment message. For the layer 1 or layer 2-based PSCell addition process, the second message may be an SN addition request acknowledgment message. For the layer 1 or layer 2-based PSCell handover process, if the source network device is an MN and the target network device is a target SN, the second message may be an SN addition request acknowledgment message. If the source network device is a source SN and the target network device is a target SN, step S502 may be replaced with: The target SN sends the information #B to the source SN, and correspondingly, the source SN receives the information #B from the target SN. For example, the target SN first sends an SN addition request acknowledgment message including the information #B to the MN, and then the MN sends the SN change acknowledgment message including the information #B to the source SN.

The information #B may include information about an MCG or information about an SCG. For example, the information #B includes the information about the SCG. A plurality of PSCells may be configured for the UE in history. To enable the UE to be handed over between the plurality of PSCells, in this embodiment of this application, when a PSCell handover occurs, the UE may retain information about each SCG previously configured by the network side for the UE. The network side may further subsequently configure information about a new SCG for the UE. Information about an SCG may be obtained through delta configuration (delta configuration) performed based on information about another SCG. For example, SCG information 1 is obtained through delta configuration performed based on SCG information 2. When configuring the SCG information 1 for the UE, the network device (for example, the target network device) needs to send only a changed part of the SCG information 1 relative to the SCG information 2 to the UE, and the network device may not need to send a part that is the same as the SCG information 2 to the UE. This reduces signaling overheads. If the information #B uses this delta configuration manner, after the source network device sends the information #B to the UE, the UE may not know information about an SCG based on which delta configuration is performed to obtain information about an SCG included in the information #B. As a result, the UE cannot obtain the information about the SCG included in the information #B. The same applies to information about an MCG.

Therefore, it is proposed in this embodiment of this application that the information #B may further include reference information, to indicate a delta configuration object corresponding to a radio resource configuration included in the information #B. The radio resource configuration included in the information #B is, for example, a part of the information about the MCG (which may be referred to as partial information of the MCG), or a part of the information about the SCG (which may be referred to as partial information of the SCG), or a part of a radio resource configuration of the MCG (which may be referred to as a partial radio resource configuration of the MCG), or a part of a radio resource configuration of the SCG (which may be referred to as a partial radio resource configuration of the SCG). For example, the information #B includes a partial radio resource configuration corresponding to a first candidate cell, and the first candidate cell is one of the K candidate cells. The information #B further includes first reference information, and the first reference information is reference information corresponding to the first candidate cell. The first reference information may indicate to perform delta configuration based on all of a radio resource configuration of a reference cell corresponding to the first candidate cell and the partial radio resource configuration corresponding to the first candidate cell in the information #B, to determine all of a radio resource configuration of the first candidate cell. In other words, the first reference information may indicate to perform delta configuration based on all of the radio resource configuration of the reference cell corresponding to the first candidate cell and the partial radio resource configuration corresponding to the first candidate cell in the information #B, to determine all of the radio resource configuration of the first candidate cell. All of a radio resource configuration of a candidate cell is all of the configuration of the candidate cell, and is not just a radio resource configuration of the candidate cell included in the information #B. It may also be understood that the first reference information indicates a reference cell, to implicitly indicate that the reference cell is a cell corresponding to the first candidate cell, and the UE needs to determine all of the radio resource configuration of the first candidate cell based on the radio resource configuration of the reference cell. For example, the first candidate cell is a candidate PSCell, and the radio resource configuration of the first candidate cell included in the information #B is partial information in information about an SCG corresponding to the candidate PSCell. The reference cell is another PSCell, and the radio resource configuration of the reference cell is information about an SCG corresponding to the reference cell. The first reference information indicates that delta configuration may be performed based on the information about the SCG corresponding to the reference cell and the information about the SCG corresponding to the candidate PSCell in the information #B, to determine all information in the information about the SCG corresponding to the candidate PSCell. For another example, the first candidate cell is a candidate PCell, and the radio resource configuration of the first candidate cell included in the information #B is partial information in information about an MCG corresponding to the candidate PCell. The reference cell is another PCell, and the radio resource configuration of the reference cell is information about an MCG corresponding to the reference cell. The first reference information indicates that delta configuration may be performed based on the information about the MCG corresponding to the reference cell and the partial information about the MCG corresponding to the candidate PCell in the information #B, to determine all information in the information about the MCG corresponding to the candidate PCell.

In an implementation, when the UE currently accesses a cell, and the currently accessed cell is, for example, a PCell or a PSCell, partial radio resource configurations of some candidate cells included in the information #B may be obtained after delta configuration performed based on a radio resource configuration of the cell currently accessed by the UE. In this case, the information #B may also include corresponding indication information. For example, the information #B includes a partial radio resource configuration corresponding to a second candidate cell, and the second candidate cell is one of the K candidate cells. The information #B further includes second reference information, and the second reference information is reference information corresponding to the second candidate cell. The second reference information may indicate to perform delta configuration (delta configuration) based on the radio resource configuration of the cell currently accessed by the UE and the partial radio resource configuration corresponding to the second candidate cell in the information #B, to determine all of a radio resource configuration of the second candidate cell. The second reference information and the first reference information may be different types of information. For example, a quantity of bits of the second reference information is different from that of the first reference information, and/or a format of the second reference information is different from that of the first reference information. For example, the second candidate cell is a candidate PSCell, and the partial radio resource configuration of the second candidate cell included in the information #B is partial information about an SCG corresponding to the candidate PSCell. The cell currently accessed by the UE is another PSCell, and the radio resource configuration of the cell currently accessed by the UE is information about an SCG corresponding to the currently accessed cell. The second reference information indicates that delta configuration may be performed based on the information about the SCG corresponding to the currently accessed cell and the partial information about the SCG corresponding to the second candidate cell in the information #B, to determine all information about the SCG of the candidate PSCell. For another example, the second candidate cell is a candidate PCell, and the partial radio resource configuration of the second candidate cell included in the information #B is partial information about an MCG corresponding to the candidate PCell. The cell currently accessed by the UE is another PCell, and the radio resource configuration of the cell currently accessed by the UE is information about an MCG corresponding to the currently accessed cell. The second reference information indicates that delta configuration may be performed based on the information about the MCG corresponding to the currently accessed cell and the partial information about the MCG corresponding to the second candidate cell in the information #B, to determine all information about the MCG of the candidate PCell.

Alternatively, if radio resource configurations of some candidate cells included in the information #B are obtained, by default, through delta configuration performed based on the radio resource configuration of the cell currently accessed by the UE, the information #B may not include corresponding indication information. For example, the information #B includes a partial radio resource configuration corresponding to the second candidate cell. The second candidate cell is one of the K candidate cells, and the information #B does not include reference information corresponding to the second candidate cell. If the information #B does not include the second reference information, to indicate that delta configuration is performed based on the radio resource configuration of the cell currently accessed by the UE and the partial radio resource configuration corresponding to the second candidate cell in the information #B, to determine the radio resource configuration of the second candidate cell. For example, the second candidate cell is a candidate PSCell, and the partial radio resource configuration of the second candidate cell included in the information #B is partial information about an SCG corresponding to the candidate PSCell. The cell currently accessed by the UE is another PSCell, and a radio resource configuration of the cell currently accessed by the UE is information about an SCG corresponding to the currently accessed cell. The information #B does not include the reference information corresponding to the second candidate cell to indicate that delta configuration is performed based on the information about the SCG corresponding to the currently accessed cell and the partial information about the SCG corresponding to the second candidate cell in the information #B, to determine all information about the SCG of the candidate PSCell. For another example, the second candidate cell is a candidate PCell, and the partial radio resource configuration of the second candidate cell included in the information #B is partial information about an MCG corresponding to the candidate PCell. The cell currently accessed by the UE is another PCell, and a radio resource configuration of the cell currently accessed by the UE is information about an MCG corresponding to the currently accessed cell. The information #B does not include the reference information corresponding to the second candidate cell to indicate that delta configuration is performed based on the information about the MCG corresponding to the currently accessed cell and the partial information about the MCG corresponding to the second candidate cell in the information #B, to determine all information about the MCG of the candidate PCell.

In another case, if the UE does not access a cell currently, for example, does not access a PSCell currently, or the target network device does not expect to perform delta configuration based on a radio resource configuration of another cell, the information #B may further include radio resource configurations of some candidate cells. These radio resource configurations may not be delta configured based on any radio resource configuration, but are full configurations (full configuration). That is, these radio resource configurations include all content, and do not need to be indicated by using another radio resource configuration. In this case, if the UE does not access a cell currently, and radio resource configurations of some candidate cells included in the information #B are full configurations, the information #B may not include corresponding reference information. For example, the UE does not access a cell currently, and the information #B includes a radio resource configuration corresponding to a third candidate cell. The third candidate cell is one of the K candidate cells, and the information #B does not include reference information corresponding to the third candidate cell. The information #B may indicate, by not including the reference information corresponding to the third candidate cell, that the radio resource configuration of the third candidate cell included in the information #B is a full configuration. For example, the UE does not access a PSCell currently, the third candidate cell is a candidate PSCell, and the radio resource configuration of the third candidate cell included in the information #B is information about an SCG corresponding to the candidate PSCell. The information #B indicates, by not including the reference information corresponding to the third candidate cell, that the information about the SCG corresponding to the candidate PSCell included in the information #B is all information about the SCG. For another example, the third candidate cell is a candidate PCell, and the radio resource configuration of the third candidate cell included in the information #B is information about an MCG corresponding to the candidate PCell. The information #B indicates, by not including the reference information corresponding to the third candidate cell, that the information about the MCG corresponding to the candidate PCell included in the information #B is all configuration information.

S503: The source network device sends the information #B to the UE. Correspondingly, the UE receives the information #B from the source network device. The information #B may be used by the source network device or the UE to determine, from the K candidate cells, a target cell that the UE accesses.

After receiving the information #B, the UE may store K radio resource configurations (information about K SCGs or information about K MCGs) included in the information #B. For example, the UE may directly store the K radio resource configurations, or for a delta configuration in the K radio resource configurations, the UE may determine a full configuration based on an indication of the information #B, and then store the full configuration.

For example, the information #B includes the partial radio resource configuration corresponding to the first candidate cell, and the first candidate cell is one of the K candidate cells. The information #B further includes the first reference information, and the first reference information is reference information corresponding to the first candidate cell. The UE determines, based on the first reference information, that all of the radio resource configuration of the first candidate cell may be determined based on the radio resource configuration of the reference cell indicated by the first reference information and the partial radio resource configuration corresponding to the first candidate cell in the information #B. The UE may store the radio resource configuration of the first candidate cell included in the information #B, and store the first reference information; or the UE may determine all of the radio resource configuration of the first candidate cell based on the radio resource configuration of the reference cell, and store all of the radio resource configuration of the first candidate cell. For example, the first candidate cell is a candidate PSCell, and the partial radio resource configuration of the first candidate cell included in the information #B is partial information about an SCG corresponding to the candidate PSCell. The reference cell is another PSCell, and the radio resource configuration of the reference cell is information about an SCG corresponding to the PSCell. The UE determines, based on the first reference information, that all information about the SCG of the candidate PSCell may be determined based on the information about the SCG corresponding to the reference cell and the partial information about the SCG of the first candidate cell in the information #B. The UE may store the partial information about the SCG corresponding to the candidate PSCell and store the first reference information, or store all the information about the SCG of the candidate PSCell. For another example, the first candidate cell is a candidate PCell, and the radio resource configuration of the first candidate cell included in the information #B is information about an MCG corresponding to the candidate PCell. The reference cell is another PCell, and the radio resource configuration of the reference cell is information about an MCG corresponding to the PCell. The UE determines, based on the first reference information, that all information about the MCG of the candidate PCell may be determined based on the information about the MCG corresponding to the PCell. The UE may store the information about the MCG corresponding to the candidate PCell, and store the first reference information. Alternatively, the UE may determine all the information about the MCG of the candidate PCell based on the information about the MCG corresponding to the PCell, and store all the information about the MCG of the candidate PCell.

For another example, the information #B includes the partial radio resource configuration corresponding to the second candidate cell, and the second candidate cell is one of the K candidate cells. The information #B further includes the second reference information, and the second reference information is reference information corresponding to the second candidate cell. The UE may determine, based on the second reference information, to perform delta configuration based on the radio resource configuration of the cell currently accessed by the UE and the partial radio resource configuration corresponding to the second candidate cell in the information #B, to determine all of the radio resource configuration of the second candidate cell. The UE may store the partial radio resource configuration of the second candidate cell included in the information #B, and store the second reference information; or the UE stores all of the radio resource configuration of the second candidate cell. For example, the second candidate cell is a candidate PSCell, and the partial radio resource configuration of the second candidate cell included in the information #B is partial information about an SCG corresponding to the candidate PSCell. The cell currently accessed by the UE is another PSCell, and a radio resource configuration of the cell currently accessed by the UE is information about an SCG corresponding to the cell currently accessed. The UE determines, based on the second reference information, that delta configuration may be performed based on the information about the SCG corresponding to the currently accessed PSCell and the partial information about the SCG corresponding to the second candidate cell in the information #B, to determine all information about the SCG corresponding to the candidate PSCell. The UE may store the partial information about the SCG corresponding to the candidate PSCell and store the second reference information, or store all the information about the SCG of the candidate PSCell. For another example, the second candidate cell is a candidate PCell, and the partial radio resource configuration of the second candidate cell included in the information #B is partial information about an MCG corresponding to the candidate PCell. The cell currently accessed by the UE is another PCell, and a radio resource configuration of the cell currently accessed by the UE is information about an MCG corresponding to the PCell. The UE determines, based on the second reference information, that all information about the MCG of the candidate PCell may be determined based on the information about the MCG corresponding to the PCell and the partial information about the MCG of the second candidate cell in the information #B. The UE may store the partial information about the MCG corresponding to the candidate PCell and store the second reference information. Alternatively, the UE may store all the information about the MCG of the candidate PCell.

For another example, the information #B includes a partial radio resource configuration corresponding to the second candidate cell. The second candidate cell is one of the K candidate cells, and the information #B does not include reference information corresponding to the second candidate cell. If the UE currently accesses a cell, because the information #B does not include the second reference information, the UE may determine all of the radio resource configuration of the second candidate cell based on a radio resource configuration of the cell currently accessed by the UE. When the UE stores the radio resource configuration of the second candidate cell, there may be different storage manners. For example, the UE may store the partial radio resource configuration of the second candidate cell included in the information #B. Optionally, the UE may add third reference information for the radio resource configuration of the second candidate cell, to indicate a cell corresponding to the radio resource configuration of the second candidate cell (the cell is the cell currently accessed by the UE). Alternatively, the UE may perform delta configuration based on the radio resource configuration of the cell currently accessed by the UE and the partial radio resource configuration of the second candidate cell in the information #B, to obtain all of the radio resource configuration of the second candidate cell, and store all of the radio resource configuration of the second candidate cell. In this case, the UE may no longer add the third reference information for the second candidate cell.

It can be learned from the foregoing that, if the UE stores the partial radio resource configuration of the second candidate cell included in the information #B, the UE may add the third reference information for the second candidate cell and store the third reference information. In this way, even if the UE is handed over from the currently accessed cell to another cell, or the UE releases the currently accessed cell, the UE can subsequently determine that a radio resource configuration of a cell based on which delta configuration is performed to obtain the radio resource configuration of the second candidate cell. For example, the second candidate cell is a candidate PSCell, and the radio resource configuration of the second candidate cell is information about an SCG corresponding to the candidate PSCell. The cell currently accessed by the UE is another PSCell, and the radio resource configuration of the cell currently accessed by the UE is information about an SCG corresponding to the currently accessed PSCell. The UE determines, based on the information #B that does not include the reference information corresponding to the second candidate cell, that all information about the SCG of the candidate PSCell may be determined based on the information about the SCG corresponding to the currently accessed PSCell. The UE stores the partial radio resource configuration of the candidate PSCell included in the information #B, and the UE may add the third reference information for the candidate PSCell. The third reference information indicates, for example, the currently accessed PSCell, to indicate that the radio resource configuration of the second candidate cell is determined based on the radio resource configuration of the currently accessed PSCell, and the UE stores the third reference information. Alternatively, the UE may perform delta configuration based on the radio resource configuration of the currently accessed PSCell and the partial radio resource configuration of the second candidate cell in the information #B, to determine all of the radio resource configuration of the candidate PSCell, and store all of the radio resource configuration of the candidate PSCell. In this case, the UE does not need to add the third reference information for the candidate PSCell. For another example, the second candidate cell is a candidate PCell, and the radio resource configuration of the second candidate cell is information about an MCG corresponding to the candidate PCell. The cell currently accessed by the UE is another PCell, and a radio resource configuration of the PCell currently accessed by the UE is information about an MCG corresponding to the currently accessed PCell. The UE determines, based on the information #B that does not include the reference information corresponding to the second candidate cell, that all information about the MCG of the candidate PCell may be obtained based on the information about the MCG corresponding to the currently accessed PCell and the partial information of the MCG included in the information #B, and stores all the information about the MCG corresponding to the candidate PCell.

For another example, if the UE does not access a cell currently, or the target network device does not expect to perform delta configuration based on a radio resource configuration of another cell, the information #B includes all of a radio resource configuration corresponding to the third candidate cell, and the third candidate cell is one of the K candidate cells. The information #B does not include reference information corresponding to the third candidate cell. The UE may determine, based on the information #B that does not include the reference information corresponding to the third candidate cell, that the radio resource configuration of the third candidate cell included in the information #B is a full configuration, and the UE may store the full configuration. Optionally, the UE further stores fourth reference information, to indicate that delta configuration does not need to be performed on the radio resource configuration of the third candidate cell with reference to the radio resource configuration of the another cell, or indicate that the stored radio resource configuration of the third candidate cell is a full configuration. For example, the UE does not access a PSCell currently, the third candidate cell is a candidate PSCell, and the radio resource configuration of the third candidate cell is information about an SCG corresponding to the candidate PSCell. The UE determines, based on the information #B that does not include the reference information corresponding to the third candidate cell, that the information about the SCG corresponding to the candidate PSCell included in the information #B is full configuration information, and the UE may store the information about the SCG corresponding to the candidate PSCell included in the information #B. Optionally, the UE further stores fourth reference information corresponding to the candidate PSCell. For another example, the third candidate cell is a candidate PCell, and the radio resource configuration of the third candidate cell is information about an MCG corresponding to the candidate PCell. The UE determines, based on the information #B that does not include the reference information corresponding to the third candidate cell, that the information about the MCG corresponding to the candidate PCell included in the information #B is full configuration information, and the UE may store the information about the MCG corresponding to the candidate PCell included in the information #B. Optionally, the UE further stores fourth reference information corresponding to the candidate PCell.

Optionally, the source network device may further send indication information #C to the UE, and the UE may receive the indication information #C from the source network device. The indication information #C may indicate that when the UE is handed over from the currently accessed cell to another cell, the cell currently accessed is used as a candidate cell. That is, a radio resource configuration of the currently accessed cell is stored as a radio resource configuration of a candidate cell. The currently accessed cell is, for example, a PCell or a PSCell. When the UE is handed over from the currently accessed cell to another cell, the currently accessed cell may be used as a candidate cell for a next cell handover of the UE. In this way, when the UE is handed over next time, the source network device may not need to configure the currently accessed cell as a candidate cell of the UE, to reduce resource overheads required by the source network device to configure the currently accessed cell as a candidate cell, and expand a target cell selection range of the UE during a handover.

Optionally, this embodiment of this application may further include S504 to S508 to be described below.

S504: The UE measures a part or all of the K candidate cells.

S505: The UE sends a measurement result to the source network device. Correspondingly, the source network device receives the measurement result from the UE.

For example, the UE may periodically send the measurement result to the source network device, or the UE may send the measurement result to the source network device when an event is triggered. A manner in which the UE sends the measurement result may be indicated by the source network device. For example, the source network device indicates, in configuration information, a manner in which the UE sends the measurement result, or the source network device may indicate, to the UE by using another message, a manner in which the UE sends the measurement result.

The measurement result may include measurement results of a part or all of the K candidate cells. The UE may include, in the measurement result, all measurement results of candidate cells obtained through measurement, or the measurement result includes only a part of measurement results obtained by the UE by measuring the candidate cells (for example, the UE measures three candidate cells in total, and the measurement result includes measurement results of two of the candidate cells, but does not include a measurement result of the other candidate cell). If the measurement result includes only a part of measurement results obtained by the UE by measuring the candidate cells, it indicates that the UE screens the measurement results of the candidate cells, and the measurement result includes a measurement result that meets a screening condition. For example, the information #B includes selection conditions #A of K PCells (that is, the information #B includes selection conditions of the K candidate cells). The selection condition may be the second selection condition in S307. For a description of the second selection condition, refer to S307. Alternatively, the selection conditions of the K PCells may not be included in the information #B, and the source network device may send K selection conditions #B to the UE. Alternatively, even if the information #B includes the selection conditions #A of the K PCells, the source network device may send the K selection conditions #B to the UE. The K selection conditions #B are selection conditions of the K PCells, and one selection condition #B corresponds to one PCell. The K selection conditions #B and the K selection conditions #A may be the same, not completely the same, or completely different. For example, the K selection conditions #B are determined by the source network device. Similarly, for example, the information #B includes selection conditions #C of K PSCells (that is, the information #B includes selection conditions of the K candidate cells). The selection condition #C may be the first selection condition in S307. For a description of the first selection condition, refer to S307. Alternatively, the selection conditions #C of the K PSCells may not be included in the information #B, and the source network device may send K selection conditions #D to the UE. Alternatively, even if the information #B includes the selection condition #C of the K PSCells, the source network device may send the K selection conditions #D to the UE. The K selection conditions #D are selection conditions of the K PSCells, and one selection condition #D corresponds to one PSCell. The K selection conditions #D and the K selection conditions #C may be the same, not completely the same, or completely different. For example, the K selection conditions #D are determined by the source network device.

A measurement result of a candidate cell includes, for example, a measurement result of the UE on a beam of the candidate cell, and/or includes a cell measurement result of the candidate cell.

S506: The source network device sends a handover command to the UE. Correspondingly, the UE receives the handover command from the source network device.

The handover command may indicate to hand over to a target candidate cell. The target candidate cell is one of the K candidate cells. A prerequisite for the handover to the target candidate cell as indicated by the handover command is that a measurement result of the target candidate cell is good, or a measurement result of the target candidate cell can meet a selection condition of the target candidate cell, or a measurement result of the target candidate cell is better than a measurement result of a cell currently accessed by the UE. If one or more of the following conditions are met, the handover command may not indicate handover, or the source network device may not send the handover command: All measurement results of the K candidate cells are poor, none of measurement results of the K candidate cells meet a corresponding candidate cell selection condition, or all measurement results of the K candidate cells are worse than the measurement result of the candidate cell (a cell provided by the source network device) currently accessed by the UE. In this embodiment of this application, an example in which the handover command indicates to hand over to the target candidate cell is used.

In this embodiment of this application, a handover process is based on a layer 1 or a layer 2. Therefore, the handover command may be layer 1 signaling, for example, the handover command is carried by a PDCCH; or the handover command may be layer 2 signaling, for example, a MAC CE.

The source MN may select one of the K candidate cells based on the measurement result, and indicate the UE to access the candidate cell. The candidate cell is the target candidate cell.

S507: The UE is handed over to the target candidate cell.

For example, the UE performs a random access procedure with the target candidate cell. To access the target candidate cell, the UE needs to obtain a radio resource configuration of the target candidate cell. Because the UE has stored the radio resource configurations of the K candidate cells, the UE may obtain the radio resource configuration of the target candidate cell based on the stored information, for example, obtain information about an MCG of a target candidate PCell, or obtain information about an SCG of a target candidate PSCell, and configure each protocol layer on a UE side based on the radio resource configuration.

Optionally, if the UE receives indication information #C, the UE may use the currently accessed cell as a candidate cell during a handover.

After the UE is handed over to the target candidate cell, if the UE is subsequently handed over to another candidate cell and then handed over back to the target candidate cell, a key corresponding to the UE in the target candidate cell may not be changed, and the UE does not need to renegotiate a key with the target candidate cell, so that the UE can communicate with the target candidate cell as soon as possible. For example, the target candidate cell is a target PSCell. After being handed over to the target candidate PSCell, the UE is subsequently handed over to another candidate PSCell, and then is handed over back to the target candidate PSCell. If an SN 1 provides the target candidate PSCell, and an SN 2 provides the another candidate PSCell, when the UE is handed over from the target candidate PSCell to the another candidate PSCell, an SN handover is involved. Therefore, after the UE is handed over from the another candidate PSCell back to the target candidate PSCell, a key of the UE in the SN 1 may not need to be changed.

Optionally, the target network device corresponding to the target candidate cell may send suspending indication information to a core network device, to indicate to suspend data transmission corresponding to a PDU session or a quality of service flow (quality of service flow, QoS flow). For example, because the target candidate cell cannot admit the PDU session or the QoS flow, another candidate cell or another candidate target network device may subsequently admit the PDU session or the QoS flow. Therefore, the target network device sends the suspending indication information to the core network device. In this way, the core network device may suspend sending data of the PDU session or the QoS flow to the current target network device, but may not release the PDU session or the QoS flow. When the UE is subsequently handed over to another target network device, the core network device may send the data of the PDU session or the QoS flow to the another target network device again, and does not need to indicate the another target network device to establish the PDU session or the QoS flow.

Alternatively, S505 and S506 may not be performed, but may be replaced with S508. After S508 is performed, S507 may be performed.

S508: The UE selects a target candidate cell based on a measurement result.

For example, if the UE is to select a target candidate PSCell, the UE may select the target candidate PSCell from K candidate PSCells based on a selection condition #C or a selection condition #D and based on the measurement result. For another example, if the UE is to select a target candidate PCell, the UE may select the target candidate PCell from K candidate PCells based on a selection condition #A or a selection condition #B and based on the measurement result.

Optionally, after selecting the target candidate cell, the UE may send indication information #D to the source network device. The indication information #D may indicate that the UE is to access the target candidate cell, so that the source network device determines a cell to which the UE selects to access. In other words, the target candidate cell may be determined by the source network device, or may be determined by the UE. This manner is flexible. If the source network device makes a decision, it is equivalent to: the source network device has a decision right to select the target candidate cell, so that a selection result is more accurate, and a proper target candidate cell is selected for the terminal device, to improve communication quality of the terminal device in the target candidate cell. In addition, because a selection result is accurate, a process in which reselection is required because the selected target candidate cell is improper is reduced, and communication efficiency of the terminal device can be improved. However, if the UE makes a decision, the UE does not need to report a measurement result to the network, to reduce signaling overheads and shorten a handover delay.

Optionally, when the target network device is a target SN, after selecting the target candidate PSCell, the UE may send the indication information #D to the MN. The indication information #D may indicate that the UE is to access the target candidate PSCell, so that the MN determines a PSCell that the UE selects to access.

According to the method provided in this embodiment of this application, the UE can implement a layer 1 or layer 2-based PCell handover process or PSCell handover process in a plurality of scenarios (for example, an MR-DC scenario or a single-connectivity scenario). In this embodiment of this application, network devices may learn address information of each other in advance, and when data of the UE is transferred during a subsequent handover between the network devices, the address information does not need to be obtained through control plane interaction, to improve data transfer efficiency.

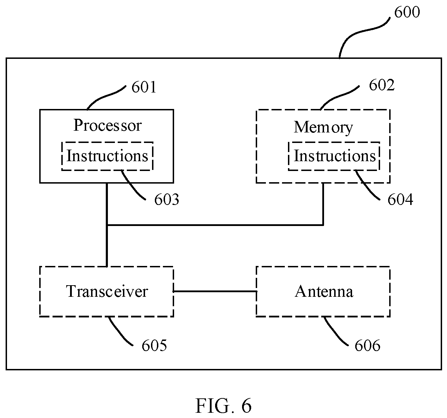

FIG. 6 is a schematic diagram of a structure of a communication apparatus 600 according to an embodiment of this application. The communication apparatus 600 may be the terminal device according to any one of the embodiment shown in FIG. 2, the embodiment shown in FIG. 3, or the embodiment shown in FIG. 5, and is configured to implement the method performed by the terminal device in the foregoing method embodiments. Alternatively, the communication apparatus 600 may be the network device according to any one of the embodiment shown in FIG. 2, the embodiment shown in FIG. 3, or the embodiment shown in FIG. 5, and is configured to implement the method corresponding to the network device in the foregoing method embodiments. The network device is, for example, the source master network device in the embodiment shown in FIG. 2, or the source master network device in the embodiment shown in FIG. 3, or the source network device in the embodiment shown in FIG. 5, or the target network device in the embodiment shown in FIG. 5. For a specific function, refer to the descriptions in the foregoing method embodiments.

The communication apparatus 600 includes one or more processors 601. The processor 601 may also be referred to as a processing unit, and may implement a specific control function. The processor 601 may be a general-purpose processor, a dedicated-purpose processor, or the like, for example, a baseband processor, a central processing unit, an application processor, a modem processor, a graphics processor, an image signal processor, a digital signal processor, a video codec processor, a controller, a memory, and/or a neural network processor. The baseband processor may be configured to process a communication protocol and communication data. The central processing unit may be configured to control the communication apparatus 600, execute a software program, and/or process data. Different processors may be independent components, or may be integrated into one or more processors, for example, integrated into one or more application-specific integrated circuits.

Optionally, the communication apparatus 600 includes one or more memories 602, configured to store instructions 604. The instructions 604 may be run on the processor 601, so that the communication apparatus 600 performs the method described in the foregoing method embodiments. Optionally, the memory 602 may further store data. The processor and the memory may be separately disposed, or may be integrated together.

Optionally, the communication apparatus 600 may store instructions 603 (which may also be referred to as code or a program sometimes). The instructions 603 may be run on the processor 601, so that the communication apparatus 600 performs the method described in the foregoing embodiments. The processor 601 may store data.

Optionally, the communication apparatus 600 may further include a transceiver 605 and an antenna 606. The transceiver 605 may be referred to as a transceiver unit, a transceiver, a transceiver circuit, an input/output interface, or the like, and is configured to implement a transceiver function of the communication apparatus 600 through the antenna 606.

Optionally, the communication apparatus 600 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a radar, a camera, a display, or the like. It may be understood that, in some embodiments, the communication apparatus 600 may include more or fewer components, or some components are integrated, or some components are split. These components may be implemented by hardware, software, or a combination of software and hardware.

The processor 601 and the transceiver 605 described in this embodiment of this application may be implemented on an integrated circuit (integrated circuit, IC), an analog IC, a radio frequency integrated circuit (radio frequency identification, RFID), a mixed signal IC, an application-specific integrated circuit (application-specific integrated circuit, ASIC), a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

If the communication apparatus 600 is the terminal device in the embodiment shown in FIG. 2 or the embodiment shown in FIG. 3, and is configured to implement the method performed by the terminal device in the foregoing method embodiments, the transceiver 605 is configured to receive first information from a source master network device of the communication apparatus 600 through the antenna 606. The first information includes information about M candidate primary cells and information about N candidate primary secondary cells. The M candidate primary cells are determined by a target master network device for the communication apparatus 600, the N candidate primary secondary cells are determined by at least one secondary network device for the communication apparatus 600, and M and N are positive integers. The transceiver 605 is configured to send a first measurement result to the source master network device through the antenna 606. The first measurement result includes measurement results obtained by measuring a part or all of the M candidate primary cells. The transceiver 605 is configured to receive a handover command from the source master network device through the antenna 606. The handover command indicates to hand over to a target candidate primary cell and connect to a target candidate primary secondary cell, and the target candidate primary secondary cell belongs to the N candidate primary secondary cells.

If the communication apparatus 600 is the terminal device in the embodiment shown in FIG. 5, and is configured to implement the method performed by the terminal device in the foregoing method embodiment, the transceiver 605 is configured to receive third information and sixth indication information from a source network device of the communication apparatus 600 through the antenna 606. The third information includes information about K candidate cells determined by a target network device of the communication apparatus 600 for the communication apparatus 600, and the sixth indication information indicates to use a currently accessed cell as a candidate cell when the communication apparatus 600 is handed over from the currently accessed cell to another cell. The processor 601 is configured to invoke the instructions 604 stored in the memory 602 to measure a part or all of the K candidate cells, where an obtained measurement result is used to determine a target candidate cell of the terminal device; or the processor 601 is configured to invoke the instructions 603 to measure a part or all of the K candidate cells, where an obtained measurement result is used to determine the target candidate cell of the terminal device.

If the communication apparatus 600 is the source master network device in the embodiment shown in FIG. 2 or the embodiment shown in FIG. 3, and is configured to implement the method corresponding to the source master network device in the foregoing method embodiments, the transceiver 605 is configured to receive first information from a target master network device through the antenna 606. The first information includes information about M candidate primary cells and information about N candidate primary secondary cells, the M candidate primary cells are determined by the target master network device for a terminal device, the N candidate primary secondary cells are determined by at least one secondary network device for the terminal device, and M and N are positive integers. The transceiver 605 is configured to send the first information to the terminal device through the antenna 606. The transceiver 605 is configured to receive a first measurement result from the terminal device through the antenna 606. The first measurement result includes measurement results of a part or all of the M candidate primary cells, and the first measurement result is used to select a target candidate primary cell from the M candidate primary cells. The transceiver 605 is configured to send a handover command to the terminal device through the antenna 606. The handover command indicates the terminal device to be handed over to the target candidate primary cell and connected to a target candidate primary secondary cell, and the target candidate primary secondary cell belongs to the N candidate primary secondary cells.

If the communication apparatus 600 is the source network device in the embodiment shown in FIG. 5, and is configured to implement the method corresponding to the source network device in the foregoing method embodiment, the transceiver 605 is configured to send a first message to a target network device through the antenna 606. The first message is used to request to hand over a terminal device from the communication apparatus 600 to the target network device, and the first message includes fourth indication information and address information of the communication apparatus 600. The fourth indication information indicates that the terminal device is to be handed over to the target network device through a layer 1 or layer 2-based handover process, and the address information of the communication apparatus 600 is used to migrate data to the communication apparatus 600. The transceiver 605 is configured to receive a second message from the target network device through the antenna 606. The second message includes third information and address information of the target network device, the third information includes information about K candidate cells determined by the target network device for the terminal device, the address information of the target network device is used to migrate data to the target network device after the terminal device is handed over to the target network device, and K is a positive integer. The transceiver 605 is configured to send the third information to the terminal device through the antenna 606. The third information is used to determine, from the K candidate cells, a target candidate cell that the terminal device accesses.

If the communication apparatus 600 is the target network device in the embodiment shown in FIG. 5, and is configured to implement the method corresponding to the target network device in the foregoing method embodiment, the transceiver 605 is configured to receive a first message from a source network device of a terminal device through the antenna 606. The first message is used to request to hand over the terminal device to the communication apparatus 600, and the first message includes fourth indication information and address information of the source network device of the terminal device. The fourth indication information indicates that the terminal device is to be handed over to the communication apparatus 600 through a layer 1 or layer 2-based handover process, and the address information of the source network device is used to migrate data to the source network device. The transceiver 605 is configured to send a second message to the source network device through the antenna 606. The second message includes third information and address information of the communication apparatus 600, the third information includes information about K candidate cells determined by the communication apparatus 600 for the terminal device, the address information of the communication apparatus 600 is used to migrate data to the communication apparatus 600 after the terminal device is handed over to the communication apparatus 600, and K is a positive integer.

For other functions that can be implemented by the communication apparatus 600, refer to descriptions of one or more embodiments in the embodiment shown in FIG. 2, the embodiment shown in FIG. 3, or the embodiment shown in FIG. 5. Details are not described again.

In the several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of an instruction or a data structure and that can be accessed by a computer. In addition, through illustrative but not limited description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

## Claims

1. A communication method, wherein the method is applied to a source master network device, and the method comprises:
receiving first information from a target master network device, wherein the first information comprises information about M candidate primary cells and information about N candidate primary secondary cells, the M candidate primary cells are determined by the target master network device for a terminal device, the N candidate primary secondary cells are determined by at least one secondary network device for the terminal device, and M and N are positive integers;
sending the first information to the terminal device;
receiving a first measurement result from the terminal device, wherein the first measurement result comprises measurement results of a part or all of the M candidate primary cells, and the first measurement result is used to select a target candidate primary cell from the M candidate primary cells; and
sending a handover command to the terminal device, wherein the handover command indicates the terminal device to be handed over to the target candidate primary cell and connected to a target candidate primary secondary cell, and the target candidate primary secondary cell belongs to the N candidate primary secondary cells.

2. The method according to claim 1, wherein the method further comprises:
receiving a second measurement result from the terminal device, wherein the second measurement result comprises measurement results of a part or all of the N candidate primary secondary cells, wherein
the second measurement result is used to select the target candidate primary secondary cell.

3. The method according to claim 2, wherein the handover command comprises first indication information, and the first indication information indicates the terminal device to be connected to the target candidate primary secondary cell.

4. The method according to claim 2 or 3, wherein
a measurement result of a candidate primary secondary cell comprised in the second measurement result is higher than a first threshold; and/or
the measurement result of the candidate primary secondary cell comprised in the second measurement result meets a selection condition of the candidate primary secondary cell.

5. The method according to any one of claims 1 to 4, wherein the first information further comprises a selection condition of at least one candidate primary secondary cell, the selection condition comprises a priority of the candidate primary secondary cell, and/or comprises a first threshold value, and the first threshold value is a threshold value that needs to be met by a parameter value obtained through measurement when the candidate primary secondary cell is selected.

6. The method according to any one of claims 2 to 5, wherein the second measurement result is comprised in layer 1 control information or layer 2 control information.

7. The method according to any one of claims 1 to 6, wherein the first measurement result is comprised in the layer 1 control information or the layer 2 control information.

8. The method according to any one of claims 1 to 7, wherein the first information further indicates at least one correspondence, and each correspondence is a correspondence between one candidate primary cell and at least one candidate primary secondary cell.

9. The method according to any one of claims 1 to 8, wherein
the receiving first information from a target master network device comprises: receiving handover request acknowledgment information from the target master network device, wherein the handover request acknowledgment information comprises the first information; and
the method further comprises: sending a handover request message to the target master network device, wherein the handover request message comprises information about a source secondary network device that is accessed by the terminal device when the terminal device accesses the source master network device.

10. The method according to claim 9, wherein the handover request message further comprises second indication information, and the second indication information indicates that the terminal device is to be handed over to the target candidate primary cell through a layer 1 or layer 2-based handover process.

11. A communication method, wherein the method is applied to a terminal device, and the method comprises:
receiving first information from a source master network device of the terminal device, wherein the first information comprises information about M candidate primary cells and information about N candidate primary secondary cells, the M candidate primary cells are determined by a target master network device for the terminal device, the N candidate primary secondary cells are determined by at least one secondary network device for the terminal device, and M and N are positive integers;
sending a first measurement result to the source master network device, wherein the first measurement result comprises measurement results obtained by measuring a part or all of the M candidate primary cells; and
receiving a handover command from the source master network device, wherein the handover command indicates the terminal device to be handed over to a target candidate primary cell and connected to a target candidate primary secondary cell, the target candidate primary secondary cell belongs to the N candidate primary secondary cells, and the target candidate primary cell belongs to the M candidate primary cells.

12. The method according to claim 11, wherein the method further comprises:
sending a second measurement result to the source master network device, wherein the second measurement result comprises measurement results obtained by measuring a part or all of the N candidate primary secondary cells.

13. The method according to claim 12, wherein the handover command comprises first indication information, and the first indication information indicates the terminal device to be connected to the target candidate primary secondary cell.

14. The method according to claim 12 or 13, wherein
a measurement result of a candidate primary secondary cell comprised in the second measurement result is higher than a first threshold; and/or
the measurement result of the candidate primary secondary cell comprised in the second measurement result meets a selection condition of the candidate primary secondary cell.

15. The method according to claim 14, wherein the first information further comprises at least one selection condition, each selection condition corresponds to one candidate primary secondary cell, the selection condition comprises a priority of the candidate primary secondary cell, and/or comprises a first threshold value, and the first threshold value is a threshold value that needs to be met by a parameter value obtained through measurement when the candidate primary secondary cell is selected.

16. The method according to any one of claims 12 to 15, wherein the second measurement result is comprised in layer 1 control information or layer 2 control information.

17. The method according to any one of claims 11 to 16, wherein the first measurement result is comprised in the layer 1 control information or the layer 2 control information.

18. The method according to any one of claims 11 to 17, wherein the first information further indicates at least one correspondence, and each correspondence is a correspondence between one candidate primary cell and at least one candidate primary secondary cell.

19. The method according to any one of claims 11 to 18, wherein the method further comprises:
sending third indication information to the target master network device, wherein the third indication information indicates that the terminal device is to be connected to the target candidate primary secondary cell.

20. A communication system, comprising a source master network device, a target master network device, and at least one secondary network device, wherein
the target master network device is configured to send first information to the source master network device, wherein the first information comprises information about M candidate primary cells and information about N candidate primary secondary cells, the M candidate primary cells are determined by the target master network device for a terminal device, the N candidate primary secondary cells are determined by the at least one secondary network device for the terminal device, and M and N are positive integers; and
the source master network device is configured to: send the first information to the terminal device, receive a first measurement result from the terminal device, and send a handover command to the terminal device, wherein the handover command indicates the terminal device to be handed over to a target candidate primary cell, the target candidate primary cell is one of the M candidate primary cells, the first measurement result comprises measurement results of a part or all of the M candidate primary cells, and the first measurement result is used to select the target candidate primary cell.

21. A communication method, wherein the method is applied to a source network device, and the method comprises:
sending a first message to a target network device, wherein the first message is used to request to hand over a terminal device from the source network device to the target network device, the first message comprises fourth indication information and address information of the source network device, the fourth indication information indicates that the terminal device is to be handed over to the target network device through a layer 1 or layer 2-based handover process, and the address information of the source network device is used to migrate data to the source network device;
receiving a second message from the target network device, wherein the second message comprises third information and address information of the target network device, the third information comprises information about K candidate cells determined by the target network device for the terminal device, the address information of the target network device is used to migrate data to the target network device after the terminal device is handed over to the target network device, and K is a positive integer; and
sending the third information to the terminal device, wherein the third information is used to determine, from the K candidate cells, a target candidate cell that the terminal device accesses.

22. The method according to claim 21, wherein the source network device is a source master network device accessed by the terminal device, and the target network device is a target master network device or a target secondary network device of the terminal device.

23. The method according to claim 21 or 22, wherein the first message further comprises fifth indication information, and the fifth indication information indicates that when the terminal device is handed over from the target network device back to the source network device, the target network device is allowed not to send a handover request message to the source network device.

24. The method according to any one of claims 21 to 23, wherein
the third information further comprises first reference information, the first reference information indicates to determine a radio resource configuration of a first candidate cell based on a radio resource configuration of a reference cell corresponding to the first candidate cell, and the first candidate cell is one of the K candidate cells; and/or
the third information further comprises second reference information, the second reference information indicates that a radio resource configuration of a second candidate cell is determined based on a radio resource configuration of a cell currently accessed by the terminal device, or indicates that the radio resource configuration of the second candidate cell is configured in a form of all configuration, and the second candidate cell is one of the K candidate cells.

25. The method according to any one of claims 21 to 24, wherein the method further comprises:
sending the address information of the target network device to at least one network device other than the target network device.

26. The method according to any one of claims 21 to 25, wherein the method further comprises:
sending sixth indication information to the terminal device, wherein the sixth indication information indicates to use a first cell as a candidate cell when the terminal device is handed over from the first cell to a second cell.

27. The method according to any one of claims 21 to 26, wherein the method further comprises:
receiving a measurement result from the terminal device, wherein the measurement result comprises measurement results of a part or all of the K candidate cells, and the measurement result is used to select the target candidate cell; and
sending a first handover command to the terminal device, wherein the first handover command indicates the terminal device to be handed over to the target candidate cell.

28. A communication method, wherein the method is applied to a target network device of a terminal device, and the method comprises:
receiving a first message from a source network device of the terminal device, wherein the first message is used to request to hand over the terminal device to the target network device, the first message comprises fourth indication information and address information of the source network device of the terminal device, the fourth indication information indicates that the terminal device is to be handed over to the target network device through a layer 1 or layer 2-based handover process, and the address information of the source network device is used to migrate data to the source network device; and
sending a second message to the source network device, wherein the second message comprises third information and address information of the target network device, the third information comprises information about K candidate cells determined by the target network device for the terminal device, the address information of the target network device is used to migrate data to the target network device after the terminal device is handed over to the target network device, and K is a positive integer.

29. The method according to claim 28, wherein the source network device is a source master network device accessed by the terminal device, and the target network device is a target master network device or a target secondary network device of the terminal device.

30. The method according to claim 28 or 29, wherein the first message further comprises fifth indication information, and the fifth indication information indicates that when the terminal device is handed over from the target network device back to the source network device, the target network device is allowed not to send a handover request message to the source network device.

31. The method according to any one of claims 28 to 30, wherein
the third information further comprises first reference information, the first reference information indicates to determine a radio resource configuration of a first candidate cell based on a radio resource configuration of a reference cell corresponding to the first candidate cell, and the first candidate cell is one of the K candidate cells; and/or
the third information further comprises second reference information, the second reference information indicates that a radio resource configuration of a second candidate cell is determined based on a radio resource configuration of a cell currently accessed by the terminal device, or indicates that information about the radio resource configuration of the second candidate cell is configured in a form of all configuration, and the second candidate cell is one of the K candidate cells.

32. The method according to any one of claims 28 to 31, wherein the method further comprises:
sending a second handover command to the terminal device, wherein the second handover command indicates the terminal device to be handed over to the source network device; and
migrating data of the terminal device to the source network device based on the address information of the source network device.

33. A communication method, wherein the method is applied to a terminal device, and the method comprises:
receiving third information and sixth indication information from a source network device of the terminal device, wherein the third information comprises information about K candidate cells determined by a target network device of the terminal device for the terminal device, and the sixth indication information indicates to use a currently accessed cell as a candidate cell when the terminal device is handed over from the cell currently accessed by the terminal device to another cell; and
measuring a part or all of the K candidate cells, wherein obtained measurement results are used to determine a target candidate cell of the terminal device.

34. The method according to claim 33, wherein the source network device is a source master network device accessed by the terminal device, and the target network device is a target master network device or a target secondary network device of the terminal device.

35. The method according to claim 33 or 34, wherein
the third information further comprises first reference information, the first reference information indicates to determine a radio resource configuration of a first candidate cell based on a radio resource configuration of a reference cell corresponding to the first candidate cell, and the first candidate cell is one of the K candidate cells; and/or
the third information further comprises second reference information, the second reference information indicates that a radio resource configuration of a second candidate cell is determined based on a radio resource configuration of a cell currently accessed by the terminal device, or indicates that information about the radio resource configuration of the second candidate cell is configured in a form of all configuration, and the second candidate cell is one of the K candidate cells.

36. The method according to claim 35, wherein the method further comprises storing radio resource configurations of the K candidate cells.

37. A communication system, comprising a source network device and a target network device, wherein
the source network device is configured to send a first message to the target network device, wherein the first message is used to request to hand over a terminal device to the target network device, the first message comprises fourth indication information and address information of the source network device, the fourth indication information indicates that the terminal device is to be handed over to the target network device through a layer 1 or layer 2-based handover process, and the address information of the source network device is used to migrate data to the source network device;
the target network device is configured to send a second message to the source network device, wherein the second message comprises third information and address information of the target network device, the third information comprises information about K candidate cells determined by the target network device for the terminal device, the address information of the target network device is used to migrate data to the target network device after the terminal device is handed over to the target network device, and K is a positive integer; and
the source network device is further configured to send the third information to the terminal device, wherein the third information is used to determine, from the K candidate cells, a target candidate cell that the terminal device accesses.

38. A communication apparatus, comprising units or modules configured to perform the method according to any one of claims 1 to 10, or comprising units or modules configured to perform the method according to any one of claims 21 to 27, or comprising units or modules configured to perform the method according to any one of claims 28 to 32.

39. A communication apparatus, comprising units or modules configured to perform the method according to any one of claims 11 to 19, or comprising units or modules configured to perform the method according to any one of claims 33 to 36.

40. A communication apparatus, comprising a processor and a memory, wherein the memory is configured to store one or more computer programs, the one or more computer programs comprise computer-executable instructions, and when the communication apparatus runs, the processor executes the one or more computer programs stored in the memory, so that the communication apparatus performs the method according to any one of claims 1 to 10, or the communication apparatus performs the method according to any one of claims 11 to 19, or the communication apparatus performs the method according to any one of claims 21 to 27, or the communication apparatus performs the method according to any one of claims 28 to 32, or the communication apparatus performs the method according to any one of claims 33 to 36.

41. A computer-readable storage medium, wherein the computer-readable storage medium is configured to store a computer program, and when the computer program is run on a computer, the computer is enabled to perform the method according to any one of claims 1 to 10, or the computer is enabled to perform the method according to any one of claims 11 to 19, or the computer is enabled to perform the method according to any one of claims 21 to 27, or the computer is enabled to perform the method according to any one of claims 28 to 32, or the computer is enabled to perform the method according to any one of claims 33 to 36.

42. A computer program product, wherein the computer program product comprises a computer program, and when the computer program is run on a computer, the computer is enabled to perform the method according to any one of claims 1 to 10, or the computer is enabled to perform the method according to any one of claims 11 to 19, or the computer is enabled to perform the method according to any one of claims 21 to 27, or the computer is enabled to perform the method according to any one of claims 28 to 32, or the computer is enabled to perform the method according to any one of claims 33 to 36.
